# EUROPEAN PATENT SPECIFICATION

(11) **EP 3 534 090 B1**
(45) Date of publication and mention of the grant of the patent: **29.09.2021**
(21) Application number: 17863903.5
(22) Date of filing: 24.08.2017
(51) Int. Cl.: F25B 13/00, B60H 1/22, B60H 1/32, F25B 1/00, F25B 39/00, B60H 1/00

(54) **HEAT PUMP CYCLE APPARATUS**
WÄRMEPUMPENKREISLAUFVORRICHTUNG
APPAREIL À CYCLE DE POMPE À CHALEUR

(30) Priority: 25.10.2016 JP 2016208969
(43) Date of publication of application: 04.09.2019
(73) Proprietor: DENSO CORPORATION, Kariya-shi, Aichi 448-8661 (JP)
(72) Inventor: ITO, Satoshi, Kariya-city Aichi 448-8661 (JP); INABA, Atsushi, Eching 85386 (DE)
(74) Representative: TBK
(86) International application number: PCT/JP2017/030231
(87) International publication number: WO 2018/079034

(56) References cited:
- JP-A- H0 939 542
- JP-A- 2000 346 568
- JP-A- 2004 218 853
- JP-A- 2013 199 251
- JP-A- 2014 001 917
- JP-A- 2016 028 916
- US-A- 5 375 427
- US-A1- 2003 200 764
- US-A1- 2015 308 462

## Description

### [CROSS REFERENCE TO RELATED APPLICATION]

The present application claims the benefit of priority from Japanese Patent Application No. 2016-208969 filed in Japan filed on October 25, 2016.

### [TECHNICAL FIELD]

The disclosure in this specification relates to a heat pump cycle apparatus.

### [BACKGROUND]

JP 2012 181 005 A and JP H08 40 056 A disclose a heat pump cycle apparatuses capable of cooling and heating. In these technologies, a heat pump cycle is adopted for the air conditioner. Thereby, heating can be provided in addition to cooling. US 2015/308462 A1 discloses a heat pump cycle apparatus having the features of the preamble of claim 1. US 2003/200764 A1 and US 5 375 427 A disclose further related prior art.

### [SUMMARY OF INVENTION]

The heat pump cycle apparatus of the prior art may have a reduced cooling capacity as compared to a refrigeration cycle device only for cooling. One of reasons is that the heat pump cycle apparatus of the prior art is based on an accumulator cycle.

Another reason is the behavior of the refrigerant in a non-utilization-side heat exchanger, i.e., an outdoor heat exchanger. In the heat pump cycle apparatus of the prior art, the flow direction of the refrigerant in the outdoor heat exchanger was the same in the cooling operation and the heating operation.

In the above aspects, or in other aspects not mentioned, there is a need for further improvements in the heat pump cycle apparatus.

It is an object of the disclosure to provide a heat pump cycle apparatus capable of providing behavior as a receiver cycle.

It is another object of the invention to provide a heat pump cycle apparatus which can use a heat exchanger suitable for the behavior of refrigerant in a heat exchanger called a non-utilization-side heat exchanger or an outdoor heat exchanger.

The above objects are solved by a heat pump cycle apparatus according to the invention having the features of claim 1. Advantageous further developments are set out in the dependent claims.

According to the disclosed heat pump cycle apparatus, the refrigerant container receives the refrigerant and causes the liquid component of the refrigerant to flow out. The control valve functions to cause the non-utilization-side heat exchanger to function as an evaporator when the refrigerant flows from the refrigerant container to the non-utilization-side heat exchanger. Thus, the refrigerant container receives the high pressure refrigerant as a receiver. The control valve functions to cause the non-utilization-side heat exchanger to function as a condenser when the refrigerant flows from the non-utilization-side heat exchanger to the refrigerant container. Thus, the refrigerant container receives the high pressure refrigerant as a receiver. Thus, the refrigerant container functions as a receiver regardless of the flow direction of the refrigerant. Thus, the behavior as a receiver cycle is provided.

The disclosed aspects in this specification adopt different technical solutions from each other in order to achieve their respective objectives. Reference numerals in parentheses described in claims and this section exemplarily show corresponding relationships with parts of embodiments to be described later and are not intended to limit technical scopes. The objects, features, and advantages disclosed in this specification will become apparent by referring to following detailed descriptions and accompanying drawings.

### [BRIEF DESCRIPTION OF DRAWINGS]

FIG. 1 is a block diagram showing an air conditioner according to a first embodiment.
FIG. 2 is a cross-sectional view showing an outdoor heat exchanger.
FIG. 3 is a block diagram showing a cooling operation of the air conditioner.
FIG. 4 is a Mollier diagram showing the cooling operation of the air conditioner.
FIG. 5 is a cross-sectional view showing a refrigerant flow in the outdoor heat exchanger in the cooling operation.
FIG. 6 is a block diagram showing a heating operation of the air conditioner.
FIG. 7 is a Mollier diagram showing the heating operation of the air conditioner.
FIG. 8 is a cross-sectional view showing a refrigerant flow in the outdoor heat exchanger in the heating operation.
FIG. 9 is a block diagram showing a first dehumidifying and heating operation of the air conditioner.
FIG. 10 is a Mollier diagram showing the first dehumidifying and heating operation of the air conditioner.
FIG. 11 is a cross-sectional view showing a refrigerant flow in the outdoor heat exchanger in the first dehumidifying and heating operation.
FIG. 12 is a block diagram showing a second dehumidifying and heating operation of the air conditioner.
FIG. 13 is a Mollier diagram showing the second dehumidifying and heating operation of the air conditioner.
FIG. 14 is a cross-sectional view showing a refrigerant flow in the outdoor heat exchanger in the second dehumidifying and heating operation.
FIG. 15 is a graph showing opening control of two expansion valves.
FIG. 16 is a flowchart showing operation of the air conditioner.
FIG. 17 is a block diagram showing an air conditioner according to a second embodiment.
FIG. 18 is a block diagram showing an air conditioner according to a third embodiment.
FIG. 19 is a block diagram showing an air conditioner according to a fourth embodiment.
FIG. 20 is a Mollier diagram showing the cooling operation of the air conditioner.
FIG. 21 is a block diagram showing an air conditioner according to a fifth embodiment.
FIG. 22 is a block diagram showing the cooling operation of an air conditioner according to the sixth embodiment.
FIG. 23 is a Mollier diagram showing a GASINJ operation in the cooling operation.
FIG. 24 is a block diagram showing the heating operation of the air conditioner.
FIG. 25 is a Mollier diagram showing a GASINJ operation in the heating operation.
FIG. 26 is a flowchart showing operation of the air conditioner.
FIG. 27 is a block diagram showing an air conditioner according to a seventh embodiment.
FIG. 28 is a block diagram showing an air conditioner according to the seventh embodiment.
FIG. 29 is a block diagram showing an air conditioner according to the seventh embodiment.

### [DETAILED DESCRIPTION]

Hereinafter, a plurality of embodiments will be described with reference to the drawings. In some embodiments, parts that are functionally and/or structurally corresponding and/or associated are given the same reference numerals, or reference numerals with different hundred digit or more digits. For corresponding parts and/or associated parts, reference can be made to the description of other embodiments.

### First Embodiment

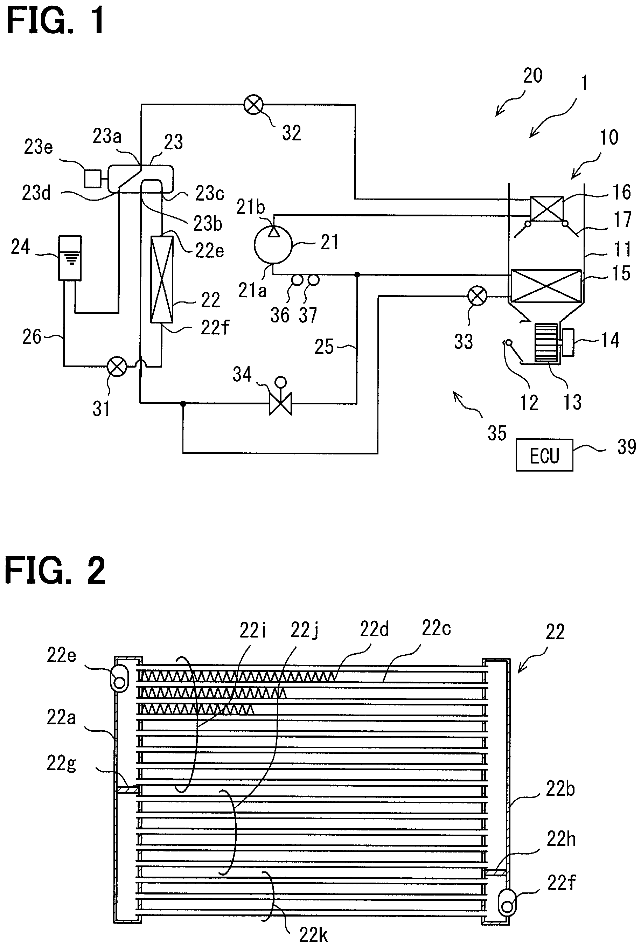

In FIG. 1, an air conditioner 1 regulates a temperature and a humidity of indoor air. The air conditioner 1 is mounted on a vehicle. The air conditioner 1 performs air-conditioning of a passenger compartment of the vehicle. The air conditioner 1 may be used for vehicles, ships, aircrafts, or real estates. An example of an application of the air conditioner 1 is a vehicle air conditioner which is mounted on a vehicle and which air-conditions a passenger compartment. For example, the air conditioner 1 is used for an electric powered vehicle traveling by an electric motor. The air conditioner 1 has an air conditioning unit 10 and a refrigerant cycle 20.

The air conditioning unit 10 regulates a temperature and a humidity of air flowing to the passenger compartment. The air conditioning unit 10 is also called an HVAC. The air conditioning unit 10 includes a case 11 in which air flows toward the passenger compartment. The case 11 includes an inside/outside air unit 12 that adjusts a ratio of inside air to outside air in an intake air, and a fan 13. The fan 13 is rotated by the motor 14 and blows air.

A first indoor heat exchanger 15 and a second indoor heat exchanger 16 are disposed in the case 11. The first indoor heat exchanger 15 and the second indoor heat exchanger 16 are arranged in this order with respect to an air flow in the case 11. The first indoor heat exchanger 15 is a cooling heat exchanger. The first indoor heat exchanger 15 is also referred to as a utilization-side heat exchanger for cooling. The second indoor heat exchanger 16 is a heating heat exchanger. The second indoor heat exchanger 16 is also called a utilization-side heat exchanger for heating.

The first indoor heat exchanger 15 is disposed in the case 11 so that the entire air flow in the case 11 passes through the first indoor heat exchanger 15. The second indoor heat exchanger 16 is disposed in the case 11 so as to form a bypass passage with the case 11. The second indoor heat exchanger 16 is disposed in the case 11 such that a controlled amount of air flow passes through the second indoor heat exchanger 16.

An air mix door 17 is disposed in the case 11 to adjust the amount of air passing through the second indoor heat exchanger 16 and the amount of air passing through the bypass passage. The air mix door 17 is fully-opened when air is allowed to pass through the second indoor heat exchanger 16, fully-closed when air is not allowed to pass through the second indoor heat exchanger 16, and can be stopped at any intermediate position. The opening degree of the air mix door 17 is adjustable by a servomotor. The inside/outside air unit 12, the air mix door 17, and the fan 13 are controlled by the control device described later.

The refrigerant cycle 20 is a vapor compression type refrigerant cycle. The refrigerant cycle 20 provides a cooling function and a heating function. In this embodiment, cooling may be referred to as cabin cooling and heating may be referred to as cabin heating. The refrigerant cycle 20 simultaneously and/or selectively provides a cooling function and a heating function. The refrigerant cycle 20 provides a heat pump cycle apparatus. The heat pump cycle apparatus includes at least one utilization-side heat exchanger and at least one non-utilization-side heat exchanger. The utilization-side heat exchanger provides a heating function by condensing the refrigerant in a high pressure region, and provides a cooling function by evaporating the refrigerant in a low pressure region.

In this embodiment, the cooling function and the heating function provided by the refrigerant cycle 20 are performed for air used for air conditioning. The cooling function and the heating function provided by the refrigerant cycle 20 may be performed for air used for article storage. The cooling function and the heating function provided by the refrigerant cycle 20 may be performed for a heat medium such as water. The refrigerant cycle 20 has a plurality of components described later. The plurality of components are connected to each other directly or via piping to flow the refrigerant.

The refrigerant cycle 20 includes a first indoor heat exchanger 15 and a second indoor heat exchanger 16. The first indoor heat exchanger 15 and the second indoor heat exchanger 16 are also components of the air conditioning unit 10 and components of the refrigerant cycle 20. The first indoor heat exchanger 15 and the second indoor heat exchanger 16 are utilization-side heat exchangers. The refrigerant cycle 20 has a compressor 21. The refrigerant cycle 20 includes an outdoor heat exchanger 22, also called non-utilization-side heat exchanger, a switching valve 23, and a refrigerant container 24.

The refrigerant cycle 20 has control valves 31, 32, 33 which can function as expansion valves and as pressure reducers. The control valves 31, 32, 33 are variable expansion valves whose opening degree can be adjusted in a range including full closing. The variable expansion valve is also called a motorized expansion valve. The refrigerant cycle 20 has a control valve 34 that can function as an on-off valve. The control valve 34 is an on-off valve. The switching valve 23 and the control valves 31, 32, 33, 34 each include an electric actuator that adjusts its opening degree or opening/closing state. The switching valve 23 and the control valves 31, 32, 33, 34 are controlled by the control device described later.

The switching valve 23 and the control valves 31, 32, 33, 34 provide a switching mechanism 35 for switching the refrigerant cycle 20 between the cooling operation and the heating operation. In the cooling operation, the refrigerant cycle 20 causes the first indoor heat exchanger 15 to function as an evaporator and causes the outdoor heat exchanger 22 to function as a condenser. In the heating operation, the refrigerant cycle 20 causes the second indoor heat exchanger 16 to function as a condenser and causes the outdoor heat exchanger 22 to function as an evaporator. Additionally or optionally, the refrigerant cycle 20 provides a dehumidifying operation in which the first indoor heat exchanger 15 functions as an evaporator and the second indoor heat exchanger 16 functions as a condenser. In this case, the outdoor heat exchanger 22 may additionally or optionally be used as a condenser and/or an evaporator. In this case, the switching mechanism 35 switches between the cooling operation, the heating operation, and the dehumidifying operation.

The switching mechanism 35 is also a reversing mechanism that reverses the refrigerant flow direction in the outdoor heat exchanger 22 in cooling operation and the refrigerant flow direction in the outdoor heat exchanger 22 in heating operation. The switching mechanism 35 causes the refrigerant to flow from the non-utilization-side heat exchanger to the refrigerant container 24 through the control valve 31 when the utilization-side heat exchanger provides the cooling function. The switching mechanism 35 causes the refrigerant to flow from the refrigerant container 24 through the control valve 31 to the non-utilization-side heat exchanger when the utilization-side heat exchanger provides the heating function. The switching mechanism allows the refrigerant to flow in one direction when the non-utilization-side heat exchanger is utilized as a condenser, and causes the refrigerant to flow in the other direction when the non-utilization-side heat exchanger is utilized as an evaporator.

The refrigerant flow direction in the outdoor heat exchanger 22 in the cooling operation gives a change in flow passage cross-sectional area suitable for heat dissipation from the refrigerant, i.e., suitable for condensation of the refrigerant. That is, in the cooling operation in which the outdoor heat exchanger 22 is used as a condenser, the passage cross-sectional area becomes relatively small as the refrigerant flows, i.e., gives a decreasing change. In the heating operation in which the outdoor heat exchanger 22 is used as an evaporator, the passage cross-sectional area becomes relatively large as the refrigerant flows, i.e., gives an increasing change.

The compressor 21 is driven by an electric motor or an internal combustion engine. When the vehicle is an electrically powered vehicle, the compressor 21 is driven by an electric motor. In this case, the refrigerant cycle 20 provides cabin cooling and cabin heating of the electric vehicle. The compressor 21 sucks a low pressure refrigerant from the suction port 21a, compresses the low pressure refrigerant into a high pressure refrigerant, and discharges the high pressure refrigerant compressed from the discharge port 21b. The compressor 21 is a machine that generates a flow of refrigerant in the refrigerant cycle 20.

The first indoor heat exchanger 15 is disposed upstream of the compressor 21. The suction port 21a of the compressor 21 is in communication with an outlet of the first indoor heat exchanger 15. The switching valve 23 is disposed upstream of the first indoor heat exchanger 15. The inlet of the first indoor heat exchanger 15 is in communication with an outlet 23b of the switching valve 23.

A bypass passage 25 is disposed between the compressor 21 and the switching valve 23. The bypass passage 25 is a passage connecting the switching valve 23 and the compressor 21 without passing through the first indoor heat exchanger 15.

The second indoor heat exchanger 16 is disposed downstream of the compressor 21. The discharge port 21b of the compressor 21 is in communication with an inlet of the second indoor heat exchanger 16. The switching valve 23 is disposed downstream of the second indoor heat exchanger 16. The inlet of the second indoor heat exchanger 16 is in communication with an inlet 23a of the switching valve 23.

The switching valve 23 has an inlet 23a, an outlet 23b, a first switching port 23c, and a second switching port 23d. The switching valve 23 has an electric actuator 23e. The switching valve 23 switches between a first position and a second position. The first position communicates the inlet 23a with the first switching port 23c. The first position communicates the outlet 23b with the second switching port 23d. The second position communicates the inlet 23a with the second switching port 23d. The second position communicates the outlet 23b with the first switching port 23c. The switching valve 23 is also referred to as a two-position four-way valve.

A bidirectional passage 26 through which the refrigerant can flow in both directions is disposed between the first switching port 23c and the second switching port 23d. The bidirectional passage 26 is a passage in which the flow direction of the refrigerant is switched by the switching valve 23. The bidirectional passage 26 communicates with the first switching port 23c at one end, and communicates with the second switching port 23d at the other end. The switching valve 23 switches the refrigerant flow direction passing through the outdoor heat exchanger 22 and the refrigerant container 24.

The outdoor heat exchanger 22 is a non-utilization-side heat exchanger. The outdoor heat exchanger 22 is disposed in the bidirectional passage 26. The outdoor heat exchanger 22 is in communication with the first switching port 23c at one end. Details of the outdoor heat exchanger 22 will be described later.

The refrigerant container 24 is disposed in series with the non-utilization-side heat exchanger. The refrigerant container 24 is arranged in series in the bidirectional passage 26. The refrigerant container 24 is in communication with the second switching port 23d at one end. The refrigerant container 24 is in communication with the outdoor heat exchanger 22 at the other end. The refrigerant container 24 receives the high pressure refrigerant in the high pressure region where the refrigerant can condense, and functions as a receiver. The refrigerant container 24 receives the refrigerant and causes the liquid component of the refrigerant to flow out. The refrigerant container 24 separates the supplied refrigerant into a gas component and a liquid component. The refrigerant container 24 flow outs the liquid component of the refrigerant to the main path of the refrigerant cycle 20. The refrigerant container 24 supplies the saturated liquid of the refrigerant to the evaporator during the condensation process of the refrigerant. The refrigerant container 24 functions as a receiver. The refrigerant container 24 may additionally or optionally have an outlet for gas injection to flow out gaseous components.

The control valve 31 is disposed in the bidirectional passage 26. The control valve 31 is disposed between the outdoor heat exchanger 22 and the refrigerant container 24. In the bidirectional passage 26, the outdoor heat exchanger 22, the control valve 31, and the refrigerant container 24 are arranged in series in this order. The control valve 31 causes the outdoor heat exchanger 22 to function as an evaporator when the refrigerant flows from the refrigerant container 24 to the outdoor heat exchanger 22. The control valve 31 causes the outdoor heat exchanger 22 to function as a condenser when the refrigerant flows from the outdoor heat exchanger 22 to the refrigerant container 24. The control valve 31 provides an opening degree that positions the refrigerant container 24 in the high pressure region and functions as a receiver for receiving the refrigerant in the high pressure region. The control valve 31 is called a first control valve or a first expansion valve. The control valve 32 is disposed between the second indoor heat exchanger 16 and the switching valve 23. The control valve 32 is disposed downstream of the second indoor heat exchanger 16. The control valve 32 is called a second control valve or a second expansion valve. The control valve 33 is disposed at the refrigerant inlet of the first indoor heat exchanger 15. The control valve 33 is disposed upstream of the first indoor heat exchanger 15. The control valve 33 is called a third control valve or a third expansion valve. The refrigerant cycle 20 has the switching valve 23, the refrigerant container 24, the control valve 31, and the non-utilization-side heat exchanger between the control valve 32 and the control valve 33.

The air conditioner 1 includes a control system for controlling the air conditioning unit 10 and the refrigerant cycle 20. The control system has a plurality of sensors. The control system may include a plurality of sensors for detecting a thermal load and a plurality of sensors for detecting the state of refrigerant at a plurality of positions of the refrigerant cycle 20. The plurality of sensors detect variables associated with control of the refrigerant cycle 20. The plurality of sensors detect the degree of superheat of the refrigerant cycle 20. The control system can include, for example, a temperature sensor 36 and a pressure sensor 37 that detect a temperature and a pressure of the refrigerant near the suction port 21a. The plurality of sensors may include necessary sensors to obtain control information. For example, the plurality of sensors include temperature sensors that detect the temperature of the air downstream to the first indoor heat exchanger 15.

The degree of superheat of the low pressure refrigerant on the suction side of the compressor 21 may be measured based on the signals detected by the temperature sensor 36 and the pressure sensor 37. The detected degree of superheat may be used to control the opening degree of the control valves 31, 32, 33. The control system includes a control unit (ECU) 39 which receives signals from a plurality of sensors. The controller 39 controls a plurality of control objects. The controller 39 controls at least the switching mechanism 35. The controller 39 controls the switching mechanism 35 so as to switch the operating state of the refrigerant cycle 20 to at least a cooling operation and a heating operation. The controller 39 can control a plurality of control objects including the number of rotations of the compressor 21, the position of the air mix door 17, the air flow rate of the fan 13, the blowing out mode and the like.

In the control system, the control device 39 is an electronic control unit. The controller 39 has at least one arithmetic processing unit (CPU) and at least one memory device (MMR) as a storage medium for storing programs and data. The controller 39 is provided by a microcomputer provided with a computer readable storage medium. The storage medium is a non-transitional tangible storage medium that temporarily stores a computer-readable program. The storage medium may be provided by a semiconductor memory, a magnetic disk, or the like. The controller 39 may be provided by a set of computer resources linked by a computer or data communication device. The program, when executed by the controller 39, causes the controller 39 to function as the device described herein, and causes the controller 39 to perform the method described herein.

The control system includes, as input devices, a plurality of signal sources that provide signals indicating information input to the controller 39. In the control system, the controller 39 acquires the information by storing the information in the memory device. The control system has a plurality of control objects whose behavior is controlled by the controller 39 as output devices. The control system converts the information stored in the memory device into a signal and supplies the signal to the controlled object, thereby controlling the behavior of the controlled object.

The controller 39, the signal source and the control objects included in the control system provide various elements. At least some of these elements can be referred to as blocks for performing the function. In another aspect, at least some of those elements can be referred to as modules or sections that are interpreted as a configuration. Furthermore, the elements contained in the control system can also be referred to as means for realizing its function only on a deliberate basis.

Software stored in a tangible memory and a computer executing the software, only the software, only hardware, or combination of them may be possible to provide a method and/or function provided by the control system. For example, if the controller is provided by an electronic circuit that is hardware, it can be provided by a digital circuit or analog circuit that includes multiple logic circuits.

In FIG. 2, the outdoor heat exchanger 22 has two headers 22a and 22b. The outdoor heat exchanger 22 has a plurality of tubes 22c disposed between the two headers 22a, 22b. The plurality of tubes 22c are stacked in parallel at an interval to one another. The plurality of tubes 22c form a plurality of air passages therebetween. A plurality of fins 22d are disposed in the air passage. The plurality of tubes 22c provide a plurality of refrigerant passages. The plurality of tubes 22c are connected to the headers 22a, 22b such that the plurality of refrigerant passages communicate the cavities in the two headers 22a, 22b.

One header 22a is provided with one connection port 22e. The other header 22b is provided with the other connection port 22f. A partition plate 22g is provided in the one header 22b. A partition plate 22h is provided in the other header 22b. The partition plates 22g and 22h are positioned in the headers 22a and 22b so that the passage cross-sectional area of the refrigerant gradually changes between the connection port 22e and the connection port 22f.

In this embodiment, the number of tubes 22c defines the passage cross-sectional area. The outdoor heat exchanger 22 has a first path 22i having "I" tubes 22c, a second path 22j having "J" tubes 22c, and a third path 33k having "K" tubes 22c. The number of tubes 22c is I> J> K. The first pass 22i provides a passage cross-sectional area greater than the second pass 22j and the third pass 22k. The third pass 22k provides a passage cross-section smaller than the first pass 22i and the second pass 22j.

The outdoor heat exchanger 22 provides the refrigerant passage in which the refrigerant passage cross-sectional area relatively changes from a large passage cross-sectional area to a small passage cross-sectional area, when one of the two connection ports 22e and 22f is used as an inlet and the other one is used as an outlet. The outdoor heat exchanger 22 provides the refrigerant passage in which the refrigerant passage cross-sectional area relatively changes from the small passage cross-sectional area to the large passage cross-sectional area, when the other one of the two connection ports 22e and 22f is used as the inlet and the one is used as the outlet. The outdoor heat exchanger 22 provides a passage cross-sectional area that decreases when the refrigerant flows in one direction and increases when the refrigerant flows in the opposite direction. Here, the passage cross-sectional area is a cross-sectional area of the passage orthogonal to the flow direction of the refrigerant. The non-utilization-side heat exchanger is configured to become relatively small in passage cross sectional area along the flow of the refrigerant when the refrigerant flows in one direction, and to become relatively large in passage cross sectional area along the flow of the refrigerant when the refrigerant flows in the other direction.

The outdoor heat exchanger 22 may have an enlarged or contracted portion of the partial passage cross-sectional area between the two connection ports 22e and 22f. The outdoor heat exchanger 22 provides, between the two connection ports 22e and 22f, a tendency of a change in state of the refrigerant flowing therethrough or a change in passage cross-sectional area in response to a phase change. The outdoor heat exchanger 22 is used as a condenser in the cooling operation. The outdoor heat exchanger 22 provides a relatively decreasing passage cross-sectional area in the cooling operation. The outdoor heat exchanger 22 is used as an evaporator in the heating operation. The outdoor heat exchanger 22 provides a relatively increasing passage cross-sectional area in the heating operation.

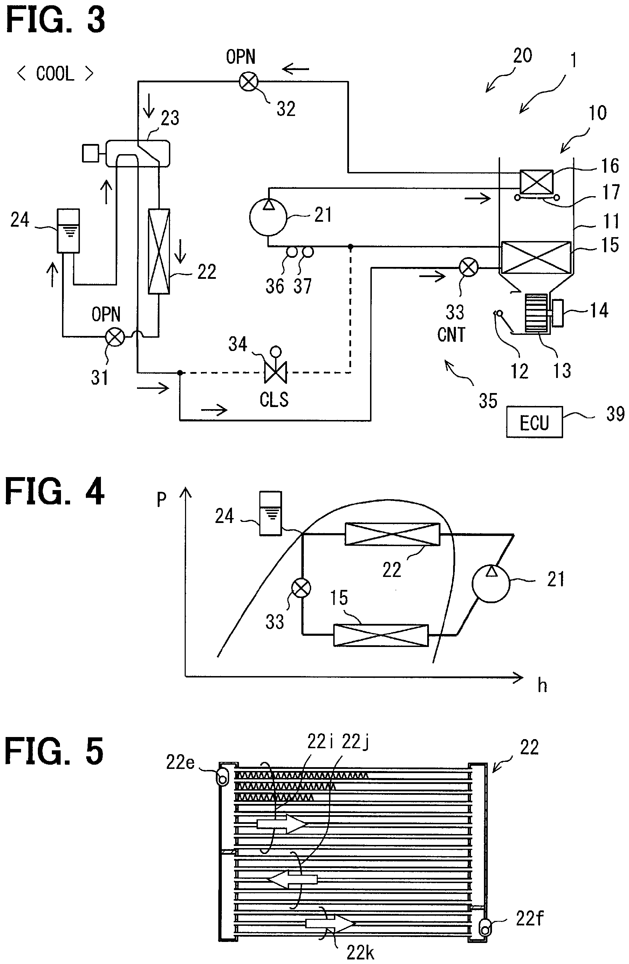

FIG. 3 shows the flow of the refrigerant when the refrigerant cycle 20 is in the cooling operation (COOL). At this time, the switching valve 23 is controlled to the first position. The control valve 33 provides a pressure reducer disposed between the high pressure region and the low pressure region of the refrigerant cycle 20. The opening degree of the control valve 33 is adjusted to the opening degree as the pressure reducer. The control valve 33 is controlled to the controlled opening degree (CNT). The controlled opening degree is controlled by the controller 39 so as to make the degree of superheat of the refrigerant cycle 20 coincide with the target. As a result, the refrigerant cycle 20 is efficiently operated while appropriately cooling the air in the first indoor heat exchanger 15. The control valves 31 and 32 are controlled to an open state (OPN). The refrigerant can pass through the control valves 31, 32 without producing a special pressure reduction. The control valve 34 is controlled to an open state (CLS). The air mix door 17 is controlled to a heating restriction position so that air does not pass through the second indoor heat exchanger 16, that is, the second indoor heat exchanger 16 does not function as a condenser. The rotation speed of the compressor 21 is controlled such that the temperature of the air downstream of the air in the first indoor heat exchanger 15 approaches to and is maintained at a target air temperature.

The refrigerant flows out from the compressor 21, and passes through the second indoor heat exchanger 16, the switching valve 23, the outdoor heat exchanger 22, the refrigerant container 24, the control valve 33 as the pressure reducer, and the first indoor heat exchanger 15, and returns to the compressor 21. The outdoor heat exchanger 22 functions as a condenser. The first indoor heat exchanger 15 functions as an evaporator.

FIG. 4 shows a Mollier diagram when the refrigerant cycle 20 is in a cooling operation. The refrigerant container 24 functions as a receiver. The refrigerant container 24 supplies the control valve 33 with the liquid component of the refrigerant in a saturated state.

FIG. 5 shows the flow of the refrigerant in the outdoor heat exchanger 22 by arrow symbols. The refrigerant flows in the order of the first path 22i, the second path 22j, and the third path 22k. The refrigerant flows in the passage where the passage cross-sectional area relatively decreases. Since the refrigerant condenses in the outdoor heat exchanger 22, its volume decreases. The change tendency of the passage cross sectional area of the outdoor heat exchanger 22 corresponds to the process of volume reduction due to condensation. In order to improve the performance as a condenser, the passage cross-sectional area on the refrigerant side is gradually reduced. In the condenser, as the refrigerant condenses, the liquid refrigerant increases, the average density increases, and the flow velocity decreases, with the result that the heat transfer coefficient of the refrigerant tends to decrease and the heat exchange performance may decrease. In order to prevent it, the passage cross-sectional area is made relatively smaller as it goes downstream. Thus, the outdoor heat exchanger 22 provides a change tendency of the passage cross-sectional area suitable for condensation of the refrigerant when the refrigerant cycle 20 is in the cooling operation.

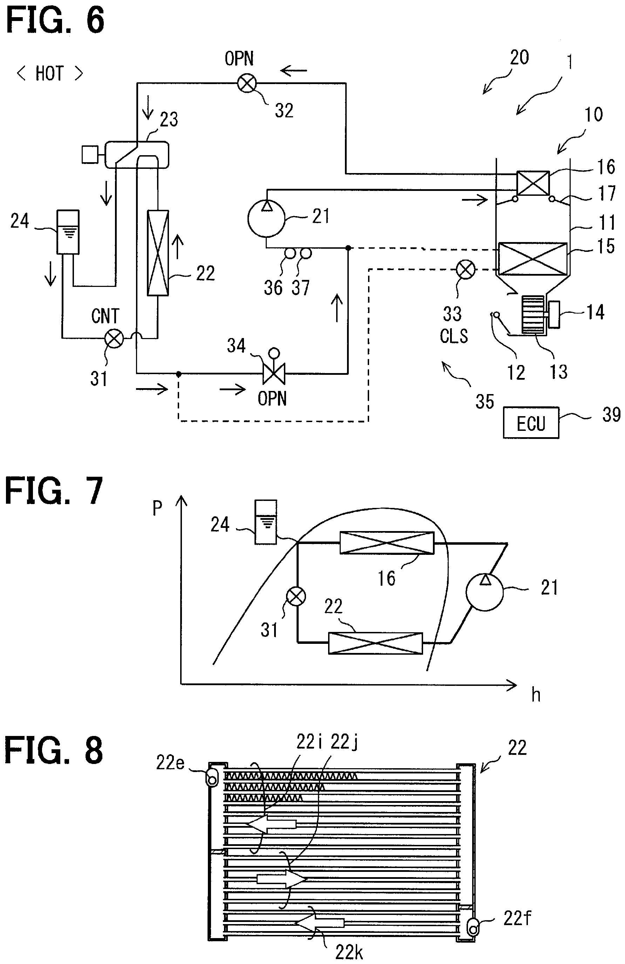

FIG. 6 shows the flow of the refrigerant when the refrigerant cycle 20 is heated (HOT). At this time, the switching valve 23 is controlled to the second position. The control valve 31 provides a pressure reducer disposed between the high pressure region and the low pressure region of the refrigerant cycle 20. The opening degree of the control valve 31 is adjusted to the opening degree as the pressure reducer. The control valve 31 is controlled to the controlled opening degree (CNT). The controlled opening degree is controlled by the controller 39 so as to make the degree of superheat of the refrigerant cycle 20 coincide with the target. As a result, the refrigerant cycle 20 is efficiently operated while appropriately heating air in the second indoor heat exchanger 16. The control valve 32 is controlled to an open state (OPN). The refrigerant can pass through the control valve 32 without producing a special pressure reduction. The control valve 33 is controlled to an open state (CLS). The control valve 34 is controlled to an open state (OPN). The air mix door 17 is controlled to a heating position so that air passes through the second indoor heat exchanger 16, that is, the second indoor heat exchanger 16 functions as a condenser. The rotation speed of the compressor 21 is controlled such that the temperature of the air downstream of the air of the second indoor heat exchanger 16 approaches to and is maintained at a target air temperature.

The refrigerant flows out from the compressor 21, and passes through the second indoor heat exchanger 16, the switching valve 23, the refrigerant container 24, the control valve 31 as the pressure reducer, and the outdoor heat exchanger 22, and returns to the compressor 21. The outdoor heat exchanger 22 functions as an evaporator. The second indoor heat exchanger 16 functions as a condenser.

FIG. 7 shows a Mollier diagram when the refrigerant cycle 20 is in a heating operation. The refrigerant container 24 functions as a receiver. The refrigerant container 24 supplies the control valve 31 with the liquid component of the refrigerant in a saturated state.

FIG. 8 shows the flow of the refrigerant in the outdoor heat exchanger 22 by arrow symbols. The refrigerant flows in the order of the third path 22k, the second path 22j, and the first path 22i. The refrigerant flows in the passage where the passage sectional area increases. Since the refrigerant evaporates in the outdoor heat exchanger 22, the volume increases. The change tendency of the passage cross sectional area of the outdoor heat exchanger 22 corresponds to the process of volume increase due to evaporation. In order to improve the performance as an evaporator, the passage cross-sectional area on the refrigerant side is gradually increased. In the evaporator, as the refrigerant evaporates, the liquid refrigerant decreases, the average density decreases, and the flow velocity increases, with the result that the pressure loss of the refrigerant tends to increase. In order to prevent it, the passage cross-sectional area is increased as it goes downstream. Thus, the outdoor heat exchanger 22 provides the change tendency of the passage cross-sectional area suitable for the evaporation of the refrigerant when the refrigerant cycle 20 is in the heating operation.

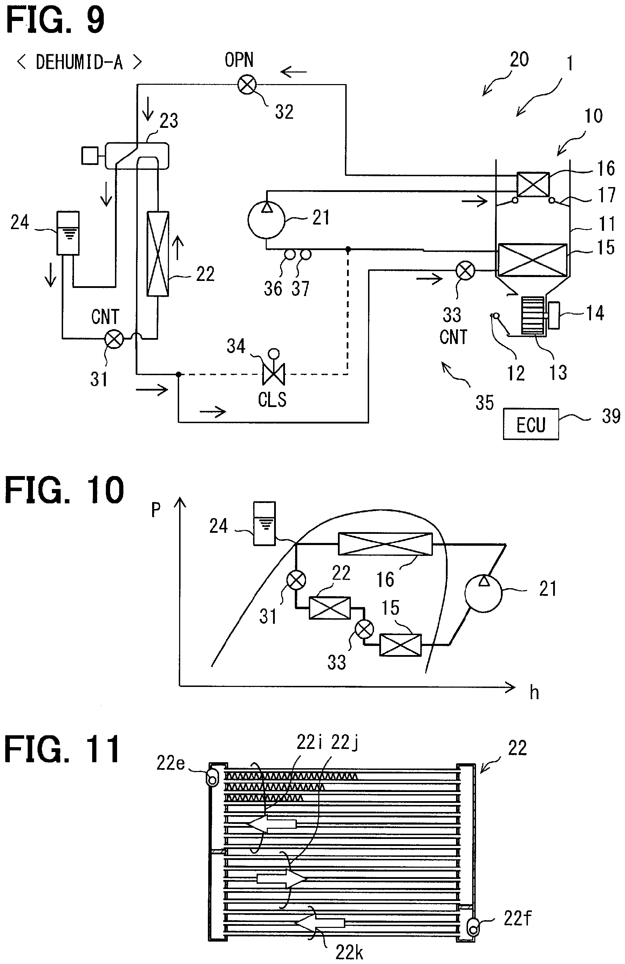

FIG. 9 shows the refrigerant flow when the refrigerant cycle 20 is subjected to the first dehumidifying and heating operation (DEHUMID-A). At this time, the switching valve 23 is controlled to the second position. The control valve 31 is controlled to the controlled opening degree (CNT). The control valve 32 is controlled to an open state (OPN). The refrigerant can pass through the control valve 32 without producing a special pressure reduction. The control valve 33 is controlled to the controlled opening degree (CNT). The control valve 34 is controlled to a closed state (CLS). The air mix door 17 is controlled to the heating position.

In the first dehumidifying and heating operation, the control valves 31, 33 provide a pressure reducer disposed between a high pressure region and a low pressure region of the refrigerant cycle 20. However, it provides two stages of pressure reduction between the high pressure region and the low pressure region. The opening degree of the control valves 31 and 33 is adjusted to the opening degree as a pressure reducer. The controlled opening degrees of the control valves 31 and 33 are controlled by the control device 39 so that the degree of superheat of the refrigerant cycle 20 coincide with the target. As a result, the refrigerant cycle 20 is operated efficiently while cooling the air in the first indoor heat exchanger 15 and heating the air again in the second indoor heat exchanger 16.

The switching mechanism 35 causes the refrigerant to flow, in the first dehumidifying and heating operation, from the refrigerant container 24 through the control valve 31 to the non-utilization-side heat exchanger when the utilization-side heat exchanger provides the dehumidifying function. The refrigerant flows out from the compressor 21, and passes through the second indoor heat exchanger 16, the switching valve 23, the refrigerant container 24, the control valve 31, the outdoor heat exchanger 22, and the first indoor heat exchanger 15, and returns to the compressor 21. The outdoor heat exchanger 22 functions as an evaporator. According to this embodiment, the heat absorption amount of the outdoor heat exchanger 22 can be adjusted by adjusting the rate of pressure reduction in the two control valves 31 and 33, whereby the blowout temperature can be adjusted. The degree of reheating of the air by the second indoor heat exchanger 16 can be adjusted by the air mix door 17.

FIG. 10 shows a Mollier diagram when the refrigerant cycle 20 is in the first dehumidifying and heating operation. The refrigerant container 24 functions as a receiver. The refrigerant container 24 supplies the control valve 31 with the liquid component of the refrigerant in a saturated state.

FIG. 11 shows the refrigerant flow in the outdoor heat exchanger 22 by arrow symbols. The refrigerant flows in the order of the third path 22k, the second path 22j, and the first path 22i. The refrigerant flows in the passage where the passage sectional area increases. Since the refrigerant evaporates in the outdoor heat exchanger 22, the volume increases. The change tendency of the passage cross sectional area of the outdoor heat exchanger 22 corresponds to the process of volume increase due to evaporation. Thus, the outdoor heat exchanger 22 provides a change tendency of a passage cross-sectional area suitable for an evaporation of the refrigerant when the refrigerant cycle 20 is subjected to the first dehumidifying and heating operation.

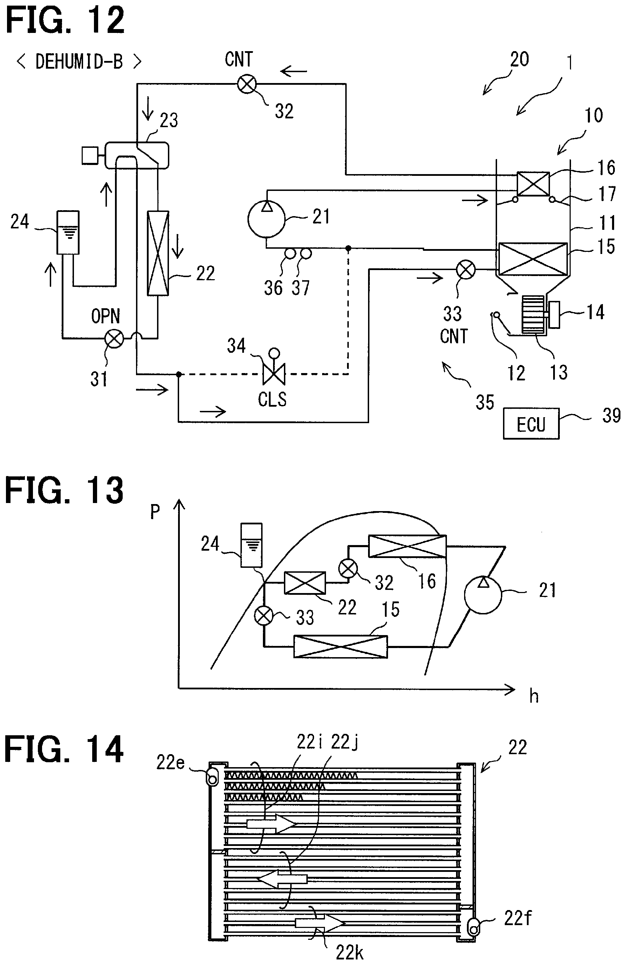

FIG. 12 shows the refrigerant flow when the refrigerant cycle 20 is subjected to the second dehumidifying and heating operation (DEHUMID-B). At this time, the switching valve 23 is controlled to the first position. The control valve 31 is controlled to an open state (OPN). The refrigerant can pass through the control valve 31 without producing a special pressure reduction. The control valve 32 is controlled to the controlled opening degree (CNT). The control valve 33 is controlled to the control opening (CNT). The control valve 34 is controlled to a closed state (CLS). The air mix door 17 is controlled to the heating position. The rotation speed of the compressor 21 is controlled such that the temperature of the air downstream of the air in the first indoor heat exchanger 15 approaches to and is maintained at a target air temperature.

In the second dehumidifying and heating operation, the control valves 32, 33 provide a pressure reducer disposed between a high pressure region and a low pressure region of the refrigerant cycle 20. However, it provides two stages of pressure reduction between the high pressure region and the low pressure region. The opening degree of the control valves 32 and 33 is adjusted to the opening degree as the pressure reducer. The controlled opening degrees of the control valves 32 and 33 are controlled by the controller 39 so that the degree of superheat of the refrigerant cycle 20 coincides with the target. The refrigerant is decompressed in the high pressure region by the control valve 32, and is received by the refrigerant container 24, and further, the refrigerant is decompressed by the control valve 33 to a low pressure, and is supplied to the first indoor heat exchanger 15, which is the utilization-side heat exchanger. As a result, the refrigerant cycle 20 is operated efficiently while cooling the air in the first indoor heat exchanger 15 and heating the air again in the second indoor heat exchanger 16.

The switching mechanism 35 causes the refrigerant to flow, in the second dehumidifying and heating operation, from the non-utilization-side heat exchanger through the control valve 31 to the refrigerant container 24 when the utilization-side heat exchanger provides the dehumidifying function. The refrigerant flows out from the compressor 21, and the second indoor heat exchanger 16, the control valve 32, the switching valve 23, the refrigerant container 24, the control valve 31, the outdoor heat exchanger 22, the control valve 33, and the first indoor heat exchanger 15, and returns to the compressor 21. The outdoor heat exchanger 22 functions as a condenser. According to this embodiment, the degree of heating of the air by the second indoor heat exchanger 16 can be adjusted by adjusting the rate of pressure reduction in the two control valves 32, 33.

FIG. 13 shows a Mollier diagram when the refrigerant cycle 20 is in the second dehumidifying and heating operation. The refrigerant container 24 functions as a receiver. The refrigerant container 24 supplies the control valve 33 with the liquid component of the refrigerant in a saturated state.

FIG. 14 shows the flow of the refrigerant in the outdoor heat exchanger 22 by arrow symbols. The refrigerant flows in the order of the first path 22i, the second path 22j, and the third path 22k. The refrigerant flows in the passage where the passage cross-sectional area decreases. Since the refrigerant condenses in the outdoor heat exchanger 22, its volume decreases. The change tendency of the passage cross-sectional area of the outdoor heat exchanger 22 corresponds to the process of volume increase due to condensation. Thus, the outdoor heat exchanger 22 provides a change tendency of a passage cross-sectional area suitable for a condensation of the refrigerant when the refrigerant cycle 20 is subjected to the second dehumidifying and heating operation.

In the first dehumidifying and heating operation, the outdoor heat exchanger 22 performs part of the evaporation process. Therefore, it can be used to reduce the air cooling capacity and/or the dehumidifying capacity by the first indoor heat exchanger 15. In the second dehumidifying and heating operation, the outdoor heat exchanger 22 performs a part of the condensation process. Therefore, it can be used to reduce the air heating capacity by the second indoor heat exchanger 16.

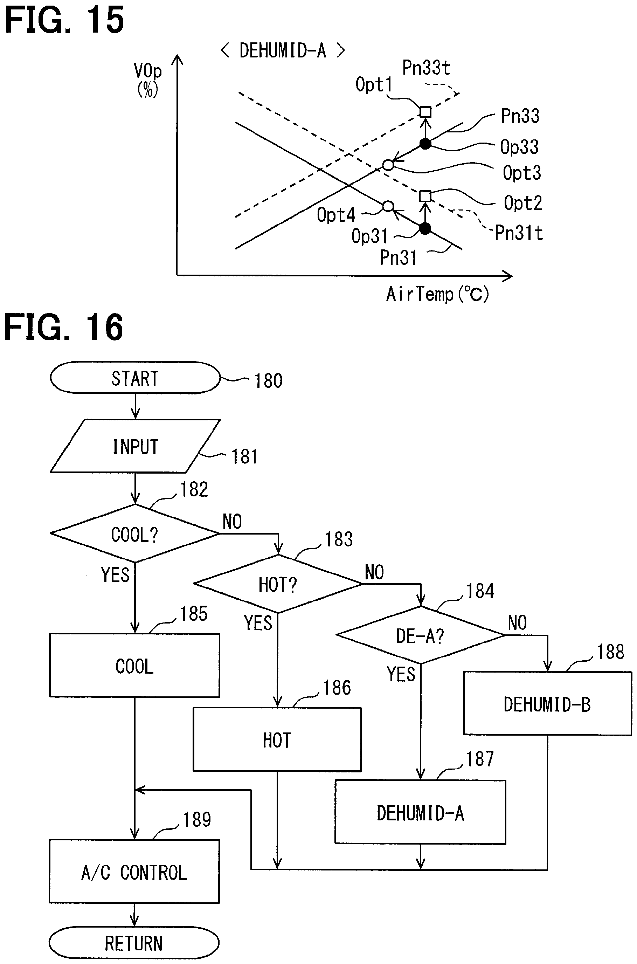

FIG. 15 shows the opening degree of the control valves 31 and 33 in the first dehumidifying and heating operation. At this time, the two control valves 31 and 33 simultaneously control two of the superheat degree of the refrigerant and the blown air temperature. The control valves 31 and 33 are controlled while maintaining predetermined opening degree patterns Pn31 and Pn33.

In a certain state, when it is determined that the degree of superheat of the refrigerant is higher than the target value, the opening degree of the control valves 31 and 33 is controlled to increase the entire opening degree while maintaining the opening degree pattern. For example, the opening degree of the control valve 33 is controlled from the initial opening degree Op33 to the target opening degree Opt1. The control point transitions from the opening degree pattern Pn33 to the opening degree pattern Pn33t. Similarly, the opening degree of the control valve 31 is also controlled from the initial opening degree Op31 to the target opening degree Opt2. The control point transitions from the opening degree pattern Pn31 to the opening degree pattern Pn31t. As a result, the amount of refrigerant flowing into the first indoor heat exchanger 15 increases, the degree of superheat decreases, and the degree of superheat is properly maintained. If the degree of superheat is low, an opposite control is performed.

In addition, when it is desired to lower the temperature of the blown air in a certain state, the control point is moved while maintaining the opening degree pattern. Specifically, the control point moves on the current opening degree pattern. The opening degree of the control valve 31 is controlled from the initial opening degree Op31 to the target opening degree Opt4. The opening slightly increases. The opening degree of the control valve 33 is controlled from the initial opening degree Op31 to the target opening degree Opt3. The opening decreases slightly. As a result, the amount of heat absorption from the outdoor heat exchanger 22 decreases, and the temperature of the blown air decrease. When it is desired to raise the temperature of the outlet air, an opposite control is performed. For example, the opening degree patterns Pn31 and Pn33 are set such that the opening degrees of the two control valves 31 and 33 become equal at the most frequently used blown air temperature.

Further, control of the control valves 32 and 33 in the second dehumidifying and heating operation is also understood from the above-described drawings. Also at this time, the two control valves 32, 33 simultaneously control two of the degree of superheat of the refrigerant and the temperature of the blown air. The control valves 32, 33 are controlled while maintaining a predetermined opening degree pattern.

FIG. 16 is a flowchart showing control of the air conditioner 1. A plurality of steps in the flowchart show a program executed by the controller 39. Control for switching the operation mode is mainly shown in the drawing.

The air conditioning control process 180 comprises a plurality of steps 181-189. In step 181, control information is input from a plurality of sensors. In step 181, switch information of the air conditioning panel operated by the user is also input. Steps 182-184 provide a switching process to switch the operating mode of the air conditioner 1. This switching process provides a switching unit that selects and executes one of a plurality of operation modes. Switching of a plurality of operation modes is executed by manual selection of the user or by automatically according to environmental conditions such as a room temperature and an outdoor temperature. Steps 185-188 each correspond to one of the operating modes. In this embodiment, a cooling mode in which a cooling operation (COOL) is performed, a heating mode in which a heating operation (HOT) is performed, a first dehumidifying and heating mode in which a first dehumidifying and heating operation (DEHUMID-A) is performed, and a second dehumidifying and heating mode in which a second dehumidifying and heating operation (DEHUMID-B) are performed.

In step 182, it is determined whether the cooling mode has been selected manually or automatically. If the cooling mode is selected, the process proceeds to step 185. In step 185, the cooling mode is executed. If the cooling mode is not selected, the process proceeds to step 183. In step 183, it is determined whether the heating mode is selected manually or automatically. If the heating mode is selected, the process proceeds to step 186. In step 186, the heating mode is executed. If the heating mode is not selected, the process proceeds to step 184. In step 184, it is determined whether the first dehumidifying and heating mode is selected manually or automatically. If the first dehumidifying and heating mode is selected, the process proceeds to step 187. In step 187, the first dehumidifying and heating mode is executed. If the first dehumidifying and heating mode is not selected, the process proceeds to step 188. In step 188, the second dehumidifying and heating mode is executed. In step 189, common air conditioning control (A/C CONTROL) not limited to a specific operation mode is performed.

In the embodiment described above, the control valve 31 that can function as the pressure reducer is provided between the outdoor heat exchanger 22 and the refrigerant container 24. Furthermore, the switching valve 23 which is a part of the switching mechanism 35 reverses the refrigerant flow direction flowing in the outdoor heat exchanger 22, the control valve 31, and the refrigerant container 24 in the cooling operation and the heating operation. That is, in the cooling operation, the refrigerant flows in the order of the outdoor heat exchanger 22, the control valve 31, and the refrigerant container 24. In the heating operation, the refrigerant flows in the order of the refrigerant container 24, the control valve 31, and the outdoor heat exchanger 22. For this reason, the refrigerant container 24 functions as a receiver in both the cooling operation and the heating operation.

Further, the outdoor heat exchanger 22 is configured such that the passage cross-sectional area of the refrigerant relatively changes from large to small. For this reason, it is possible to provide a change in the passage cross-sectional area suitable for condensation of the refrigerant, i.e., a relative change from large to small in the passage cross-sectional area, by using the outdoor heat exchanger 22 as a condenser in a cooling operation. It is possible to provide a change in the passage cross-sectional area suitable for evaporation of the refrigerant, i.e, a relative change from small to large in the passage cross-sectional area, by using the outdoor heat exchanger 22 as an evaporator in a heating operation.

Moreover, in this embodiment, the first dehumidifying and heating operation and the second dehumidifying and heating operation are provided. In the first dehumidifying and heating operation, the outdoor heat exchanger 22 can be used as an evaporator to provide a change in passage cross section suitable for evaporation of the refrigerant, i.e., a relative change from small to large in the passage cross section. In the second dehumidifying and heating operation, the outdoor heat exchanger 22 can be used as a condenser to provide a change in passage cross section suitable for condensation of the refrigerant, i.e., a relative change from large to small in the passage cross section.

### Second embodiment

This embodiment is a modification in which the preceding embodiment is a fundamental form. In the above embodiment, the refrigerant is directly used as the high-temperature medium in the second indoor heat exchanger 16. Alternatively, in this embodiment, a medium such as water is used as the high-temperature medium in the second indoor heat exchanger.

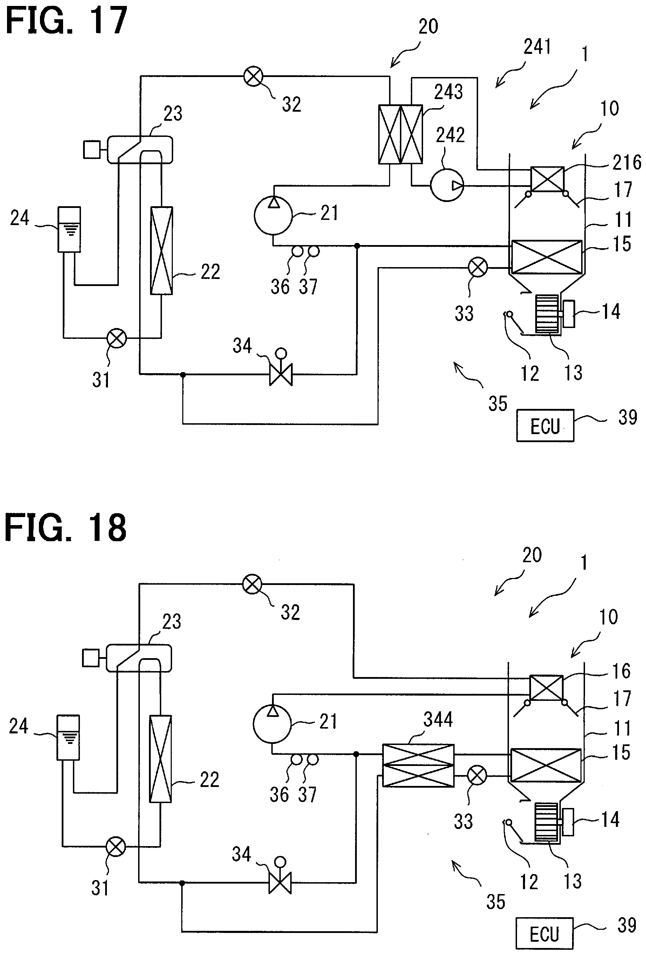

As illustrated in FIG. 17, the air conditioner 1 includes a medium cycle 241. The medium cycle 241 circulates a medium such as water, ethylene glycol, or a mixture of ethylene glycol and water. The medium cycle 241 is a cooling water system used for a general vehicle air conditioner. The medium cycle 241 may be provided as a part of a coolant system of an internal combustion engine.

The medium cycle 241 includes a pump 242, a refrigerant-medium heat exchanger 243, and a second indoor heat exchanger 216. The pump 242 circulates the medium. The refrigerant-medium heat exchanger 243 performs heat exchange between the refrigerant of the refrigerant cycle 20 and the medium of the medium cycle 241. The second indoor heat exchanger 216 performs heat exchange between the medium and the air. The second indoor heat exchanger 216 is thermally coupled to the air to be cooled or heated. The second indoor heat exchanger 216 is provided by a heater core used in a general vehicle air conditioner. The heater core provides heating by performing heat exchange between a cooling water of the internal combustion engine and air. The medium cycle 241 may include a heat source that emits waste heat, such as a water-cooled internal combustion engine or a water-cooled inverter, or an auxiliary heat source, such as an electric heater that can be used additionally.

According to this embodiment, a heater core can be utilized. Therefore, the structure of a general vehicle air conditioner can be utilized. In other words, application to a general vehicle air conditioner becomes easy.

### Third Embodiment

This embodiment is a modification in which the preceding embodiment is a fundamental form. In the above embodiment, the refrigerant cycle 20 does not include the internal heat exchanger. Alternatively, in this embodiment, the refrigerant cycle 20 includes an internal heat exchanger.

As illustrated in FIG. 18, the refrigerant cycle 20 includes an internal heat exchanger 344. The internal heat exchanger 344 performs heat exchange between the refrigerant on the upstream side and the refrigerant on the downstream side of the first indoor heat exchanger 15. The internal heat exchanger 344 contributes to improve cooling performance in the cooling operation and the operation efficiency of the refrigerant cycle.

### Fourth Embodiment

This embodiment is a modification in which the preceding embodiment is a fundamental form. In the above embodiment, the control valve 33 provides the pressure reducer in the cooling operation. Alternatively, in this embodiment, the control valve 31 and the control valve 33 provide the pressure reducers.

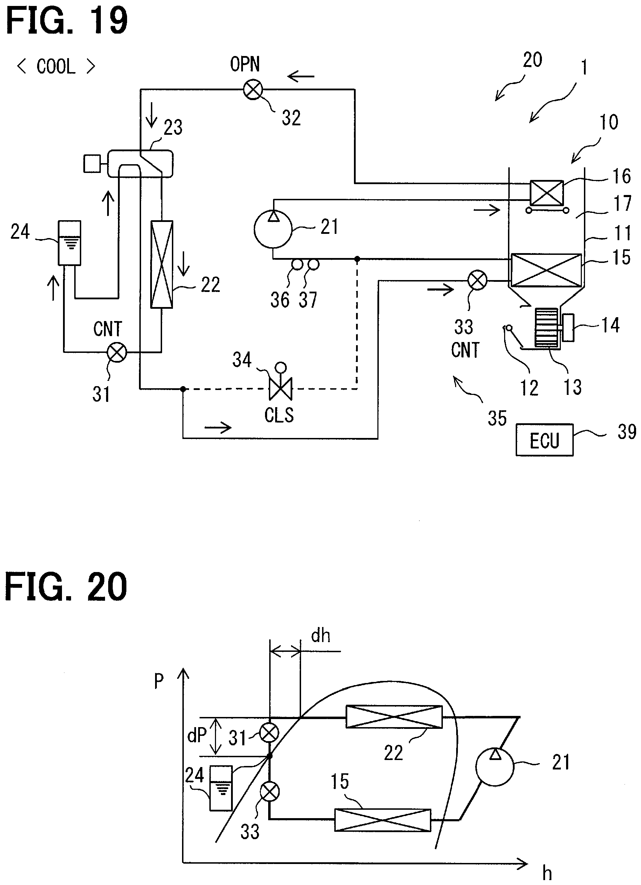

As illustrated in FIG. 19, the refrigerant cycle 20 has the same configuration as the preceding embodiment. However, in the cooling operation, the control valve 31 is controlled to the controlled opening degree (CNT). Thus, a two stage pressure reduction is provided between the high pressure region and the low pressure region of the refrigerant cycle 20.

FIG. 20 shows a Mollier diagram in the cooling operation of this embodiment. In the cooling operation, the control valve 31 is located on an upstream side of the refrigerant container 24. Therefore, the pressure reduction by the control valve 31 is provided on the upstream side of the refrigerant container 24, and the pressure reduction by the control valve 33 is provided on the downstream side of the refrigerant container 24.

In this embodiment, the control valve 31 provides an adjustable predetermined pressure reduction (dP). Thereby, the sub-cool of the refrigerant can be obtained and secured. As a result, it is possible to obtain an increase (dh) in enthalpy which can be used for the evaporation process in the cooling operation. This makes it possible to ensure the same efficiency as the sub-cool condenser system. Furthermore, it is possible to control the pressure reduction in the control valve 31 so as to ensure proper sub-cool according to the cooling load during each operation. The cooling load is approximately proportional to the flow rate of the refrigerant. Therefore, the operating efficiency of the refrigerant cycle 20 can be improved throughout the year.

### Fifth Embodiment

This embodiment is a modification in which the preceding embodiment is a fundamental form. In the above embodiment, the refrigerant cycle 20 is used for air conditioning. Alternatively, in this embodiment, the refrigerant cycle 20 is used for air conditioning and cooling a heat generating device.

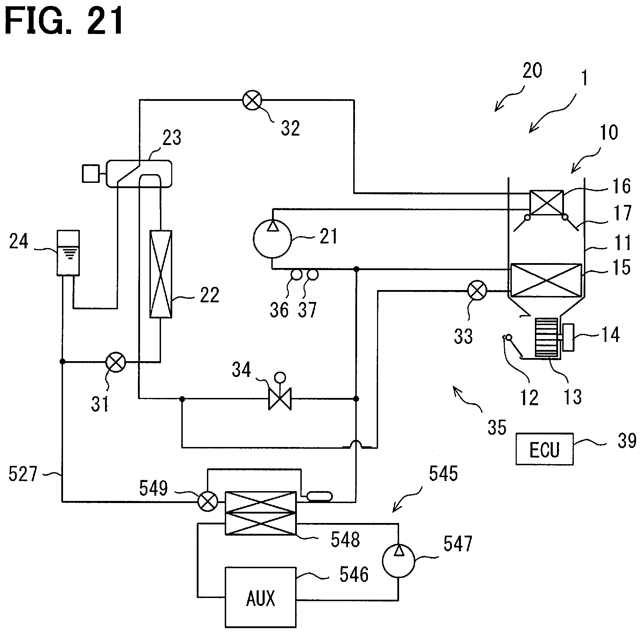

In FIG. 21, the refrigerant cycle 20 has an additional bypass passage 527 for cooling the heat generating device and a cooling cycle 545 for the heat generating device. The additional bypass passage 527 is disposed to obtain the liquid refrigerant. The cooling cycle 545 is provided to cool the heat generating device 546.

The basic configuration and control of the refrigerant cycle 20 are the same as in the preceding embodiment. In this embodiment, an additional bypass passage 527 is additionally disposed. In this embodiment, the additional bypass passage 527 communicates between the refrigerant passage between the outdoor heat exchanger 22 and the refrigerant container 24 and the suction side of the compressor 21. Therefore, liquid refrigerant is obtained in the cooling operation and the heating operation.

The cooling cycle 545 includes an apparatus (AUX) 546 and a pump 547. A refrigerant-medium heat exchanger 548 is disposed between the cooling cycle 545 and the additional bypass passage 527. The additional bypass passage 527 includes a pressure reducer 549 for the refrigerant-medium heat exchanger 548.

The device 546 may be an auxiliary device for a vehicle. An example of the device 546 is, for example, a battery of an electrically powered vehicle that uses a motor for traveling, an electric circuit such as an inverter, or the like. The electric vehicle may be an electric car without an internal combustion engine that uses only the motor for traveling, a hybrid car using both the motor and the internal combustion engine, a plug-in hybrid car which is configured to be charged externally by a commercial power supply etc. in addition to a hybrid configuration. These devices 546 may require cooling. In addition, waste heat of the device 546 can be used as a heat source as a heat pump. The cooling cycle 545 may have its own radiator.

The pump 547 circulates the medium. The refrigerant-medium heat exchanger 548 cools the medium with the refrigerant. In other words, the refrigerant draws heat from the cooling cycle 545 in the refrigerant-media heat exchanger 548. The pressure reducer 549 may be provided by a temperature sensitive expansion valve. The temperature sensitive expansion valve controls the degree of opening so as to control a degree of superheat of the refrigerant at the refrigerant outlet of the refrigerant-medium heat exchanger 548 to a predetermined value.

According to this embodiment, it is possible to arrange an additional bypass passage 527 capable of obtaining liquid refrigerant in all operation modes. Therefore, cooling of the device 546 can be performed in all operation modes. For example, the device 546 can be cooled in summer, when the device 546 is likely to be hot. Further, in winter, when the refrigerant cycle 20 is used as a heat pump, waste heat of the device 546 can be used as a heat source. As a result, it is possible to improve the operation efficiency of the refrigerant cycle 20 when the refrigerant cycle 20 is subjected to the heating operation.

### Sixth Embodiment

This embodiment is a modification in which the preceding embodiment is a fundamental form. In the above embodiment, the high pressure gas component of the refrigerant is not effectively used. Alternatively, in this embodiment, a gas injection function is realized in order to effectively use the high pressure gas component of the refrigerant.

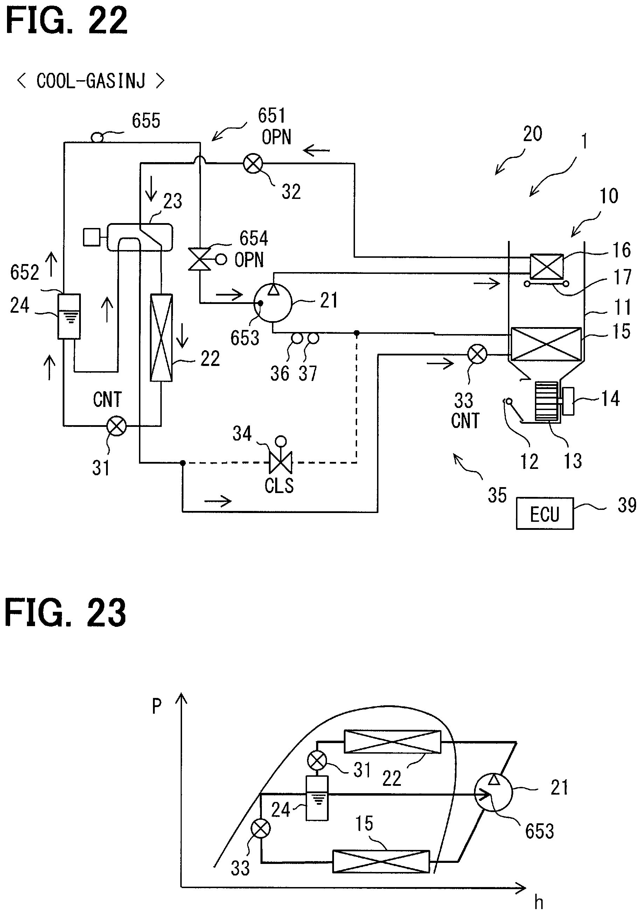

FIG. 22 shows the cooling operation of the air conditioner 1. The refrigerant cycle 20 includes a gas injection passage 651. The refrigerant container 24 has a gas component outlet 652 provided in the refrigerant container 24. The gas injection passage 651 communicates with the gas component outlet 652 of the refrigerant container 24. The gas injection passage 651 takes in the high pressure gas component of the refrigerant from the refrigerant container 24. The compressor 21 has a port 653 for gas injection. The port 653 is in communication with an intermediate stage of the compression stage in the compressor 21. The gas injection passage 651 is in communication with the port 653. The gas injection passage 651 has a control valve 654 that functions as an on-off valve for opening and closing the gas injection passage 651. The gas injection passage 651 has a pressure sensor 655 that detects the pressure of the refrigerant in the gas injection passage 651. In the gas injection mode in which the gas injection is executed, the refrigerant cycle 20 is controlled such that the refrigerant pressure in the gas injection passage 651 approaches to and coincides with the target pressure. The target pressure is given by a map using the operating state of the refrigerant cycle 20 as a variable.

In the normal cooling operation, the control valve 654 is controlled to a closed state. The operation of the other elements is the same as in the previous embodiments. Furthermore, when the condition for performing gas injection is satisfied, the gas injection operation (COOL-GASINJ) is performed. In the gas injection mode, the control valve 654 is controlled to an open state (OPN). The control valve 31 is controlled to the controlled opening degree (CNT). The control opening degree is controlled such that the refrigerant pressure in the gas injection passage 651 approaches to and coincides with the target pressure. Thus, the refrigerant decompressed to the intermediate pressure is supplied to the refrigerant container 24. The gas component of the refrigerant in the refrigerant container 24 is supplied from the port 653 to the compressor 21 via the gas injection passage 651.

FIG. 23 is a Mollier diagram showing gas injection in cooling operation. An intermediate pressure refrigerant between the high pressure and the low pressure of the refrigerant cycle 20 is supplied to the compressor 21. Thus, the maximum capacity and efficiency of the cooling operation can be improved.

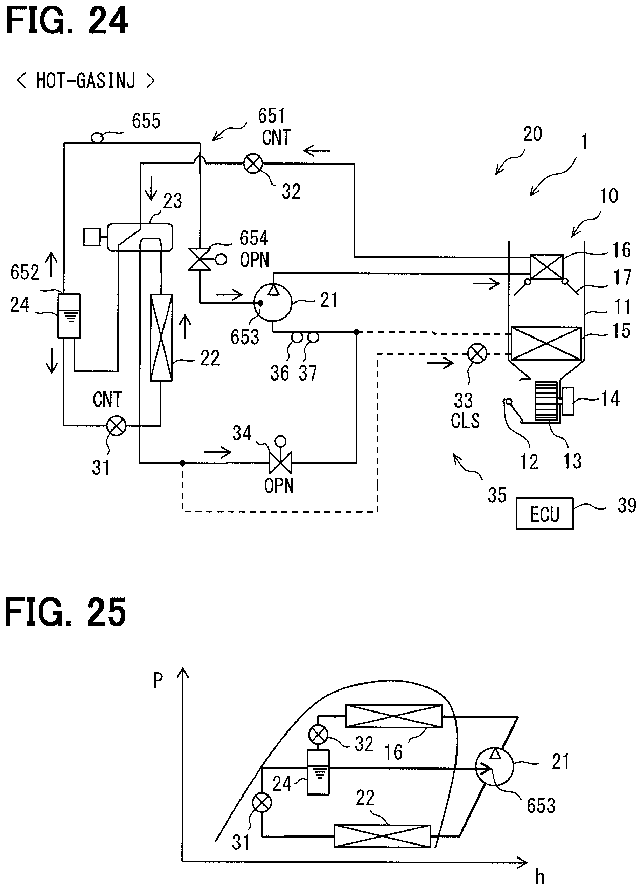

FIG. 24 shows the heating operation of the air conditioner 1. In the normal heating operation, the control valve 654 is controlled to a closed state. The operation of the other elements is the same as in the previous embodiments. Furthermore, when a condition for performing gas injection is established, a gas injection operation (HOT-GASINJ) is performed. In the gas injection mode, the control valve 654 is controlled to an open state (OPN). The control valve 31 is controlled to the controlled opening degree (CNT). The control opening degree is controlled such that the refrigerant pressure in the gas injection passage 651 approaches to and coincides with the target pressure. Thus, the refrigerant decompressed to the intermediate pressure is supplied to the refrigerant container 24. The gas component of the refrigerant in the refrigerant container 24 is supplied from the port 653 to the compressor 21 via the gas injection passage 651.

FIG. 25 is a Mollier diagram showing gas injection in the heating operation. An intermediate pressure refrigerant between the high pressure and the low pressure of the refrigerant cycle 20 is supplied to the compressor 21. Thus, the maximum capacity and efficiency of the heating operation can be improved.

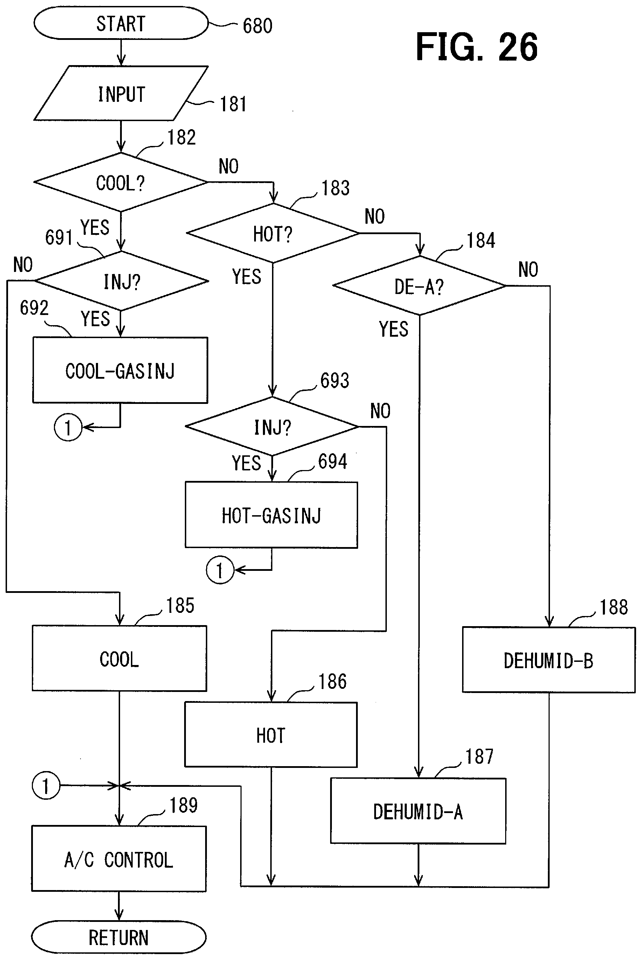

FIG. 26 is a flowchart showing control of the air conditioner 1. The air conditioning control process 680 includes steps 691-694 in addition to the plurality of steps 181-189 of the preceding embodiment. In this embodiment, gas components accumulated in the refrigerant container 24 are gas-injected from the port 653 through the gas injection passage 651 in both the cooling operation and the heating operation.

Steps 691 and 693 determine whether a gas injection condition is satisfied. In step 691, when the cooling operation is performed, it is determined whether a gas injection condition is satisfied. If the gas injection condition is satisfied, the process proceeds to step 692. In step 692, a cooling gas injection operation (COOL-GASINJ) is executed. If the gas injection condition is not satisfied, the process proceeds to step 185. In step 185, a normal cooling operation is executed. In step 693, when the heating operation is performed, it is determined whether a gas injection condition is satisfied. If the gas injection condition is satisfied, the process proceeds to step 694. In step 694, a heating gas injection operation (HOT-GASINJ) is executed. If the gas injection condition is not satisfied, the process proceeds to step 186. In step 186, a normal heating operation is executed.

According to this embodiment, the gas injection contributes to improve the maximum capacity of the refrigerant cycle 20 and to improve efficiency. Moreover, in the prior art, gas injection was available only in heating operation. In this embodiment, the saturated refrigerant gas is present in the refrigerant container 24 also in the heating operation. Therefore, in both the cooling operation and the heating operation, the gas can be taken out and used for gas injection. As a result, it is possible to improve the maximum capacity and efficiency of the cooling operation and to improve the maximum capacity and efficiency of the heating operation.

### Seventh Embodiment

This embodiment is a modification in which the preceding embodiment is a fundamental form. In the above embodiment, the outdoor heat exchanger 22, the control valve 31, and the refrigerant container 24 are disposed in the bidirectional passage 26. Alternatively, a variety of passage configurations can be employed.

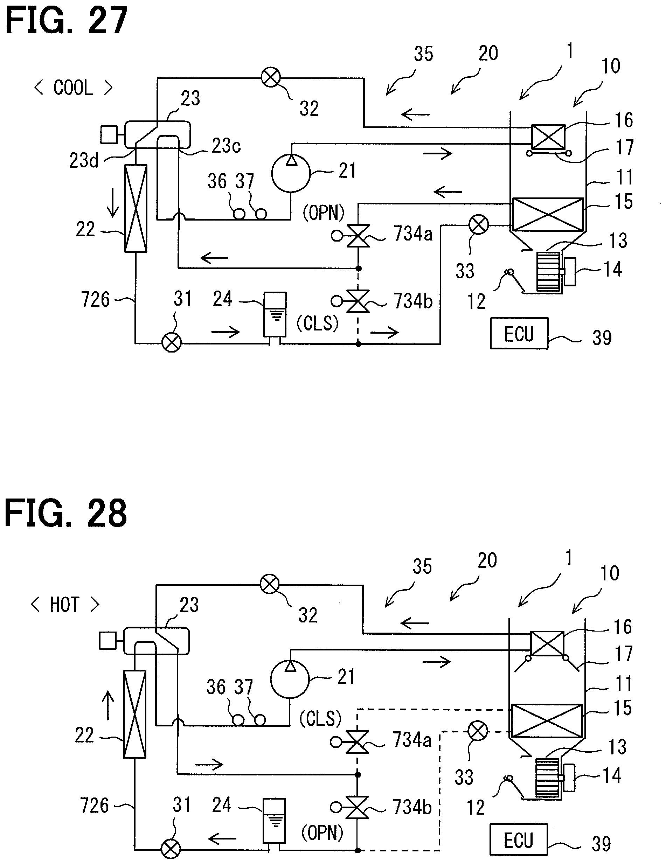

FIG. 27 shows the cooling operation (COOL) of the air conditioner 1 in this embodiment. The refrigerant cycle 20 includes the compressor 21, the outdoor heat exchanger 22, the switching valve 23, and the refrigerant container 24. The refrigerant cycle 20 has the control valves 31, 32, 33. Further, the refrigerant cycle 20 has a bidirectional passage 726 and control valves 734a and 734b functioning as on-off valves. The outdoor heat exchanger 22 is the same as the preceding embodiment.

The bidirectional passage 726 communicates with the first switching port 23c at one end. The bidirectional passage 726 communicates with the second switching port 23d at the other end. A series element group including the outdoor heat exchanger 22, the control valve 31, and the refrigerant container 24 is disposed in the bidirectional passage 726. The outdoor heat exchanger 22, the control valve 31, and the refrigerant container 24 are arranged in this order in the bidirectional passage 726. The first indoor heat exchanger 15 is disposed in the bidirectional passage 726. The series element group and the first indoor heat exchanger 15 are arranged in series in the bidirectional passage 726. The first indoor heat exchanger 15 is not disposed in the series element group. The bidirectional passage 726 provides a first passage via the first indoor heat exchanger 15. Furthermore, the bidirectional passage 726 provides a second passage not passing through the first indoor heat exchanger 15. The series elements are included in both the first passage and the second passage.

The control valve 734a is provided in series in the bidirectional passage 726. The control valve 734a is disposed only in the first passage. The control valve 734a is in series with the first indoor heat exchanger 15. The control valve 734b is provided to form a parallel bypass passage in bidirectional passage 726. The control valve 734b forms a bypass passage not passing through the first indoor heat exchanger 15. When the control valve 734a is controlled to the open state (OPN) and the control valve 734b is controlled to the closed state (CLS), the refrigerant flows to the first indoor heat exchanger 15. When the control valve 734a is controlled to the closed state (CLS) and the control valve 734b is controlled to the open state (OPN), the refrigerant does not flow to the first indoor heat exchanger 15.

The switching valve 23 is switchable between the first position and the second position. When the switching valve 23 is at the second position shown, the refrigerant flows from the outdoor heat exchanger 22 to the refrigerant container 24 via the control valve 31. When the switching valve 23 is in the first position, the refrigerant flows from the refrigerant container 24 to the outdoor heat exchanger 22 via the control valve 31.

In FIG. 27, the cooling operation is similar to that of the preceding embodiment. The air mix door 17 prevents heating of air in the second indoor heat exchanger 16. The control valve 33 is used as a pressure reducer. For example, the control valve 32 is controlled to an open state. The control valve 33 is controlled to the controlled opening degree so as to control the degree of superheat of the refrigerant between the first indoor heat exchanger 15 and the compressor 21. The outdoor heat exchanger 22 is used as a condenser in the illustrated flow direction. The control valve 31 is controlled to an open state. The refrigerant container 24 functions as a receiver for receiving the high pressure refrigerant.

In FIG. 28, the heating operation is similar to that of the preceding embodiment. The air mix door 17 allows heating of air in the second indoor heat exchanger 16. No refrigerant flows in the control valve 33. The second indoor heat exchanger 16 functions as a condenser and heats the air. The control valve 32 is controlled to an open state. The refrigerant container 24 functions as a receiver for receiving the high pressure refrigerant. The control valve 31 is used as a pressure reducer. For example, the control valve 31 is controlled to the controlled opening degree so as to control the degree of superheat of the refrigerant between the outdoor heat exchanger 22 and the compressor 21. The outdoor heat exchanger 22 is used as an evaporator in the illustrated flow direction. In the cooling operation and the heating operation, the flow direction of the refrigerant in the outdoor heat exchanger 22 is reversed.

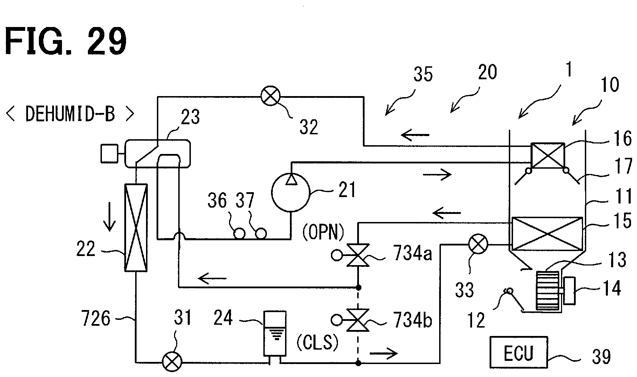

In FIG. 29, the dehumidifying and heating operation is executed also in this embodiment. In this embodiment, the second dehumidifying and heating operation (DEHUMID-B) is provided in which the outdoor heat exchanger 22 is used as a condenser. The air mix door 17 allows heating of air in the second indoor heat exchanger 16. The control valve 33 is used as a pressure reducer. For example, the control valve 33 is controlled to the controlled opening degree so as to control the degree of superheat of the refrigerant between the first indoor heat exchanger 15 and the compressor 21. The control valve 32 is controlled to an open state. The outdoor heat exchanger 22 is used as a condenser as in the cooling operation. The control valve 31 is controlled to an open state. The refrigerant container 24 functions as a receiver for receiving the high pressure refrigerant. In this embodiment, it is not provided the first dehumidifying and heating operation using the outdoor heat exchanger 22 as an evaporator. It is because if the control valve 32 functions as a pressure reducer, the refrigerant container 24 cannot function as a receiver.

Also in this embodiment, the refrigerant flow direction can be switched between when the outdoor heat exchanger is used as a condenser and when the outdoor heat exchanger is used as an evaporator.

### Other Embodiments

The disclosed technical scope is not limited to the description of the embodiment. The scope of the invention is defined by the appended claims.

In the above embodiment, switching between the cooling operation and the heating operation is provided by the switching mechanism 35, i.e., the switching valve 23, and the control valves 31, 32, 33, 34, 734a, 734b. Not according to the invention, the refrigerant cycle 20 which can be switched between the cooling operation and the heating operation can be realized even if another switching mechanism 35 is provided. For example, the switching mechanism 35 may have a plurality of two-way valves or three-way valves instead of the switching valve 23. As described above, the switching valve 23 or the switching mechanism 35 can adopt various configurations.

In the above embodiment, the outdoor heat exchanger 22 provides a passage in which the passage cross-sectional area of the refrigerant changes in at least two stages. Alternatively, the outdoor heat exchanger 22 may provide a passage in which the passage cross-sectional area changes continuously. Moreover, if the passage cross-sectional area changes with a relative tendency in the entire outdoor heat exchanger 22, the passage cross-sectional area in a part of the outdoor heat exchanger 22 may deviates from the above-mentioned tendency.

In the embodiment, only the outdoor heat exchanger 22 is illustrated as a non-utilization-side heat exchanger. Alternatively a plurality of non-utilization-side heat exchangers may be provided.

## Claims

1. A heat pump cycle apparatus including at least one utilization-side heat exchanger (15, 16, 216) and at least one non-utilization-side heat exchanger (22), comprising:
a refrigerant container (24) disposed in series with the non-utilization-side heat exchanger (22), receiving a refrigerant, and flowing out a liquid component of the refrigerant;
a first control valve (31) disposed between the non-utilization-side heat exchanger (22) and the refrigerant container (24), the first control valve (31) causing the non-utilization-side heat exchanger (22) to function as an evaporator when the refrigerant flows from the refrigerant container (24) to the non-utilization-side heat exchanger (22), and causing the non-utilization-side heat exchanger (22) to function as a condenser when the refrigerant flows from the non-utilization-side heat exchanger (22) to the refrigerant container (24); and
a switching valve (23) as a part of a switching mechanism (35) which switches the refrigerant flow direction passing through the non-utilization-side heat exchanger (22) and the refrigerant container (24), wherein
the utilization-side heat exchanger (15, 16, 216) has a cooling heat exchanger (15) and a heating heat exchanger (16), and wherein the heat pump cycle apparatus further comprises:
a second control valve (32) which is provided downstream of the heating heat exchanger (16),;
a third control valve (33) which is provided upstream of the cooling heat exchanger (15); and
a bidirectional passage (26, 726) through which the refrigerant can flow in both directions, the bidirectional passage is a passage in which the flow direction of the refrigerant is switched by the switching valve (23), wherein
the switching valve (23), the refrigerant container (24), the first control valve (31), and the non-utilization-side heat exchanger (22) are provided between the second control valve (32) and the third control valve (33), and wherein
the non-utilization-side heat exchanger (22), the first control valve (31), and the refrigerant container (24) are arranged in series in this order in the bidirectional passage;
**characterized in that**
the switching valve (23) is a four-way valve having an inlet (23a), an outlet (23b), a first switching port (23c) and a second switching port (23d), and
the bidirectional passage (26, 726) communicates with between the first switching port (23c) and the second switching port (23d).

2. The heat pump cycle apparatus claimed in claim 1, wherein
the refrigerant container (24) receives a high pressure refrigerant in a high pressure region where the refrigerant can condense and functions as a receiver.

3. The heat pump cycle apparatus claimed in claim 1 or 2, wherein
the utilization-side heat exchanger (15, 16, 216) provides a heating function by condensing the refrigerant in a high pressure region, and provides a cooling function by evaporating the refrigerant in a low pressure region, and
the first control valve (31) provides an opening degree that positions the refrigerant container (24) in the high pressure region and functions as a receiver for receiving the refrigerant in the high pressure region.

4. The heat pump cycle apparatus claimed in any one of claims 1 to 3, wherein
the switching valve (23) allows the refrigerant to flow from the non-utilization-side heat exchanger (22) through the first control valve (31) to the refrigerant container (24), when the utilization-side heat exchanger (15, 16, 216) provides a cooling function, and to flow from the refrigerant container (24) through the first control valve (31) to the non-utilization-side heat exchanger (22), when the utilization-side heat exchanger (15, 16, 216) provides a heating function.

5. The heat pump cycle apparatus claimed in any one of claims 1 to 4, wherein
the refrigerant is decompressed in the high pressure region by the second control valve (32), is received into the refrigerant container (24), is decompressed into a low pressure by the third control valve (33), and is supplied to the utilization-side heat exchanger (15).

6. The heat pump cycle apparatus claimed in any one of claims 1 to 5, wherein
the switching valve (23), when the utilization-side heat exchanger (15, 16, 216) provides a dehumidifying function, allows the refrigerant to flow from the refrigerant container (24) through the first control valve (31) to the non-utilization-side heat exchanger (22), in a first dehumidifying and heating operation, and to flow from the non-utilization-side heat exchanger (22) through the first control valve (31) to the refrigerant container (24), in a second dehumidifying and heating operation.

7. The heat pump cycle apparatus claimed in any one of claims 1 to 6, wherein
the non-utilization-side heat exchanger (22) is configured to become relatively small in passage cross sectional area along the flow of the refrigerant when the refrigerant flows in one direction, and to become relatively large in passage cross sectional area along the flow of the refrigerant when the refrigerant flows in the other direction, and
the switching valve (23) allows the refrigerant to flow in the one direction when the non-utilization-side heat exchanger (22) is used as a condenser, and to flow in the other direction when the non-utilization-side heat exchanger (22) is used as an evaporator.

8. The heat pump cycle apparatus claimed in any one of claims 1 to 7, wherein
the utilization-side heat exchanger (216) includes a medium cycle (241) including the utilization-side heat exchanger (216) which is thermally coupled to an object to be cooled or heated, and a refrigerant-medium heat exchanger (243) which performs heat exchange between the refrigerant and the medium in the medium cycle.

9. The heat pump cycle apparatus claimed in any one of claims 1 to 8, further comprising:
a cooling cycle (545) which cools a heat generating device (546); and
a refrigerant-media heat exchanger (548) which performs heat exchange between the refrigerant and medium in the cooling cycle.

10. The heat pump cycle apparatus claimed in any one of claims 1 to 9, further comprising:
a compressor (21) for compressing the refrigerant, the compressor (21) having a port (653) for gas injection; and
a gas injection passage (651) connecting a gas component outlet disposed on the refrigerant container (24) and the port, wherein
the gas component accumulated in the refrigerant container (24) is gas-injected from the port (653) through the gas injection passage (651) in both the cooling operation and the heating operation.

## Patentansprüche

1. Wärmepumpenkreislaufvorrichtung, die mindestens einen Wärmetauscher (15, 16, 216) der Verwendungsseite und mindestens einen Wärmetauscher (22) der Nichtverwendungsseite hat, mit:
einem Kältemittelbehälter (24), der mit dem Wärmetauscher (22) der Nichtverwendungsseite in Reihe angeordnet ist, ein Kältemittel aufnimmt und eine flüssige Komponente des Kältemittels ausströmen lässt;
einem ersten Steuerventil (31), das zwischen dem Wärmetauscher (22) der Nichtverwendungsseite und dem Kältemittelbehälter (24) angeordnet ist, wobei das erste Steuerventil (31) den Wärmetauscher (22) der Nichtverwendungsseite veranlasst, als ein Verdampfer zu dienen, wenn das Kältemittel von dem Kältemittelbehälter (24) zu dem Wärmetauscher (22) der Nichtverwendungsseite strömt, und den Wärmetauscher (22) der Nichtverwendungsseite veranlasst, als ein Kondensator zu dienen, wenn das Kältemittel von dem Wärmetauscher (22) der Nichtverwendungsseite zu dem Kältemittelbehälter (24) strömt; und
einem Schaltventil (23) als ein Teil eines Schaltmechanismus (35), welcher die Strömungsrichtung des Kältemittels schaltet, dass durch den Wärmetauscher (22) der Nichtverwendungsseite und den Kältemittelbehälter (24) hindurchgeht, wobei
der Wärmetauscher (15, 16, 216) der Verwendungsseite einen Kühlwärmetauscher (15) und einen Heizwärmetauscher (16) hat, und wobei die Wärmepumpenkreislaufvorrichtung ferner folgendes aufweist:
ein zweites Steuerventil (32), welches stromabwärts von dem Heizwärmetauscher (16) vorgesehen ist;
ein drittes Steuerventil (33), welches stromaufwärts von dem Kühlwärmetauscher (15) vorgesehen ist; und
einen bidirektionalen Durchgang (26, 726), durch welchen das Kältemittel in beiden Richtungen strömen kann, wobei der bidirektionale Durchgang ein Durchgang ist, in welchem die Strömungsrichtung des Kältemittels durch das Schaltventil (23) geschaltet wird, wobei
das Schaltventil (23), der Kältemittelbehälter (24), das erste Steuerventil (31) und der Wärmetauscher (22) der Nichtverwendungsseite zwischen dem zweiten Steuerventil (32) und dem dritten Steuerventil (33) vorgesehen sind, und wobei
der Wärmetauscher (22) der Nichtverwendungsseite, das erste Steuerventil (31) und der Kältemittelbehälter (24) in dieser Reihenfolge in Reihe in dem bidirektionalen Durchgang angeordnet sind;
**dadurch gekennzeichnet, dass**
das Schaltventil (43) ein Vierwegeventil ist, dass einen Einlass (23a), einen Auslass (23b), einen ersten Schaltanschluss (23c) und einen zweiten Schaltanschluss (23d) hat, und
der bidirektionale Durchgang (26, 726) mit einem Bereich zwischen dem ersten Schaltanschluss (23c) und dem zweiten Schaltanschluss (23d) in Verbindung steht.

2. Wärmepumpenkreislaufvorrichtung nach Anspruch 1, wobei
der Kältemittelbehälter (24) ein Hochdruckkältemittel in einem Hochdruckbereich aufnimmt, wo das Kältemittle kondensieren kann, und als eine Aufnahmeeinrichtung dient.

3. Wärmepumpenkreislaufvorrichtung nach Anspruch 1 oder 2, wobei
der Wärmetauscher (15, 16, 216) der Verwendungsseite eine Heizfunktion bereitstellt, indem er das Kältemittel in einem Hochdruckbereich kondensieren lässt, und eine Kühlfunktion bereitstellt, indem er das Kältemittel in einem Niederdruckbereich verdampfen lässt, und
das erste Steuerventil (31) einen Öffnungsgrad bereitstellt, der den Kältemittelbehälter (24) in den Hochdruckbereich positioniert und als eine Aufnahmeeinrichtung zum Aufnehmen des Kältemittels in dem Hochdruckbereich dient.

4. Wärmepumpenkreislaufvorrichtung nach einem der Ansprüche 1 bis 3, wobei
das Schaltventil (23) es dem Kältemittel ermöglicht, von dem Wärmetauscher (22) der Nichtverwendungsseite durch das erste Steuerventil (31) zu dem Kältemittelbehälter (24) zu strömen, wenn der Wärmetauscher (15, 16, 216) der Verwendungsseite eine Kühlfunktion bereitstellt, und von dem Kältemittelbehälter (24) durch das erste Steuerventil (31) zu dem Wärmetauscher (22) der Nichtverwendungsseite zu strömen, wenn der Wärmetauscher (15, 16, 216) der Verwendungsseite eine Heizfunktion bereitstellt.

5. Wärmepumpenkreislaufvorrichtung nach einem der Ansprüche 1 bis 4, wobei
das Kältemittel in dem Hochdruckbereich durch das zweite Steuerventil (32) entspannt wird, in den Kältemittelbehälter (24) aufgenommen wird, durch das dritte Steuerventil (33) in einen Niederdruck entspannt wird und dem Wärmetauscher (15) der Verwendungsseite zugeführt wird.

6. Wärmepumpenkreislaufvorrichtung nach einem der Ansprüche 1 bis 5, wobei,
wenn der Wärmetauscher (15, 16, 216) der Verwendungsseite eine Entfeuchtungsfunktion bereitstellt, das Schaltventil (23) es dem Kältemittel ermöglicht, bei einem ersten Entfeuchtungs-und Heizbetrieb von dem Kältemittelbehälter (24) durch das erste Steuerventil (31) zu dem Wärmetauscher (22) der Nichtverwendungsseite zu strömen, und bei einem zweiten Entfeuchtungs-und Heizbetrieb von dem Wärmetauscher (22) der Nichtverwendungsseite durch das erste Steuerventil (31) zu dem Kältemittelbehälter (24) zu strömen.

7. Wärmepumpenkreislaufvorrichtung nach einem der Ansprüche 1 bis 6, wobei
der Wärmetauscher (22) der Nichtverwendungsseite konfiguriert ist, hinsichtlich einer Durchgangsquerschnittsfläche entlang der Strömung des Kältemittels relativ klein zu werden, wenn das Kältemittel in einer Richtung strömt, und hinsichtlich einer Durchgangsquerschnittsfläche entlang der Strömung des Kältemittels relativ groß zu werden, wenn das Kältemittel in der anderen Richtung strömt, und
das Schaltventil (23) es dem Kältemittel ermöglicht, in der einen Richtung zu strömen, wenn der Wärmetauscher (22) der Nichtverwendungsseite als ein Kondensator verwendet wird, und in der anderen Richtung zu strömen, wenn der Wärmetauscher (22) der Nichtverwendungsseite als ein Verdampfer verwendet wird.

8. Wärmepumpenkreislaufvorrichtung nach einem der Ansprüche 1 bis 7, wobei
der Wärmetauscher (216) der Verwendungsseite einen Hilfsmittelkreislauf (241) hat, der den Wärmetauscher (216) der Verwendungsseite, welcher mit einem Objekt thermisch gekoppelt ist, das zu kühlen oder zu heizen ist, und einen Kältemittel-Hilfsmittel-Wärmetauscher (243) hat, welcher einen Wärmeaustausch zwischen dem Kältemittel und dem Hilfsmittel in dem Hilfsmittelkreislauf durchführt.

9. Wärmepumpenkreislaufvorrichtung nach einem der Ansprüche 1 bis 8, ferner mit:
einem Kühlkreislauf (545), der ein Wärmeerzeugungsgerät (546) kühlt; und
einem Kältemittel-Hilfsmittel-Wärmetauscher (548) hat, welche einen Wärmeaustausch zwischen dem Kältemittel und einem Hilfsmittel in dem Kühlkreislauf durchführt.

10. Wärmepumpenkreislaufvorrichtung nach einem der Ansprüche 1 bis 9, ferner mit:
einem Verdichter (21) zum Verdichten des Kältemittels, wobei der Verdichter (21) einen Anschluss (653) zur Gaseinleitung hat; und
einem Gaseinleitdurchgang (651), der einen Gaskomponentenauslass, der an dem Kältemittelbehälter (24) angeordnet ist, und den Anschluss verbindet, wobei
die in dem Kältemittelbehälter (24) angesammelte Gaskomponente sowohl bei dem Kühlbetrieb als auch bei dem Heizbetrieb von dem Anschluss (653) durch den Gaseinleitdurchgang (651) gaseingeleitet wird.

## Revendications

1. Appareil à cycle de pompe à chaleur incluant au moins un échangeur de chaleur côté utilisation (15, 16, 216) et au moins un échangeur de chaleur côté non utilisation (22), comprenant :
un réservoir de fluide frigorigène (24) disposé en série avec l'échangeur de chaleur côté non utilisation (22), recevant un fluide frigorigène, et écoulant en sortie une composante liquide du fluide frigorigène ;
une première vanne de régulation (31) disposée entre l'échangeur de chaleur côté non utilisation (22) et le réservoir de fluide frigorigène (24), la première vanne de régulation (31) amenant l'échangeur de chaleur côté non utilisation (22) à fonctionner comme un évaporateur lorsque le fluide frigorigène s'écoule du réservoir de fluide frigorigène (24) à l'échangeur de chaleur côté non utilisation (22), et amenant l'échangeur de chaleur côté non utilisation (22) à fonctionner comme un condenseur lorsque le fluide frigorigène s'écoule de l'échangeur de chaleur côté non utilisation (22) au réservoir de fluide frigorigène (24) ; et
une vanne de commutation (23) faisant partie d'un mécanisme de commutation (35) qui commute la direction d'écoulement de fluide frigorigène traversant l'échangeur de chaleur côté non utilisation (22) et le réservoir de fluide frigorigène (24), dans lequel
l'échangeur de chaleur côté utilisation (15, 16, 216) possède un échangeur de chaleur de refroidissement (15) et un échangeur de chaleur de chauffage (16), et dans lequel l'appareil à cycle de pompe à chaleur comprend en outre :
une deuxième vanne de régulation (32) qui est ménagée en aval de l'échangeur de chaleur de chauffage (16) ;
une troisième vanne de régulation (33) qui est ménagée en amont de l'échangeur de chaleur de refroidissement (15) ; et
un passage bidirectionnel (26, 726) à travers lequel le fluide frigorigène peut s'écouler dans les deux directions, le passage bidirectionnel est un passage dans lequel la direction d'écoulement du fluide frigorigène est commutée par la vanne de commutation (23), dans lequel
la vanne de commutation (23), le réservoir de fluide frigorigène (24), la première vanne de régulation (31) et l'échangeur de chaleur côté non utilisation (22) sont ménagés entre la deuxième vanne de régulation (32) et la troisième vanne de régulation (33), et dans lequel
l'échangeur de chaleur côté non utilisation (22), la première vanne de régulation (31) et le réservoir de fluide frigorigène (24) sont agencés en série dans cet ordre dans le passage bidirectionnel ;
**caractérisé en ce que**
la vanne de commutation (23) est une vanne à quatre voies ayant une entrée (23a), une sortie (23b), un premier orifice de commutation (23c) et un second orifice de commutation (23d), et
le passage bidirectionnel (26, 726) fait communiquer le premier orifice de commutation (23c) et le second orifice de commutation (23d).

2. Appareil à cycle de pompe à chaleur selon la revendication 1, dans lequel
le réservoir de fluide frigorigène (24) reçoit un fluide frigorigène à haute pression dans une région de haute pression où le fluide frigorigène peut se condenser et fonctionne comme un récepteur.

3. Appareil à cycle de pompe à chaleur selon la revendication 1 ou 2, dans lequel
l'échangeur de chaleur côté utilisation (15, 16, 216) fournit une fonction de chauffage par la condensation du fluide frigorigène dans une région de haute pression, et fournit une fonction de refroidissement par l'évaporation du fluide frigorigène dans une région de basse pression, et
la première vanne de régulation (31) fournit un degré d'ouverture qui positionne le réservoir de fluide frigorigène (24) dans la région de haute pression et fonctionne comme un récepteur pour la réception du fluide frigorigène dans la région de haute pression.

4. Appareil à cycle de pompe à chaleur selon l'une quelconque des revendications 1 à 3, dans lequel
la vanne de commutation (23) permet au fluide frigorigène de s'écouler de l'échangeur de chaleur côté non utilisation (22) à travers la première vanne de régulation (31) jusqu'au réservoir de fluide frigorigène (24), lorsque l'échangeur de chaleur côté utilisation (15, 16, 216) fournit une fonction de refroidissement, et de s'écouler du réservoir de fluide frigorigène (24) à travers la première vanne de régulation (31) jusqu'à l'échangeur de chaleur côté non utilisation (22), lorsque l'échangeur de chaleur côté utilisation (15, 16, 216) fournit une fonction de chauffage.

5. Appareil à cycle de pompe à chaleur selon l'une quelconque des revendications 1 à 4, dans lequel
le réfrigérant est décompressé dans la région de haute pression par la deuxième vanne de régulation (32), est reçu dans le réservoir de fluide frigorigène (24), est décompressé en une basse pression par la troisième vanne de régulation (33) et alimente l'échangeur de chaleur côté utilisation (15).

6. Appareil à cycle de pompe à chaleur selon l'une quelconque des revendications 1 à 5, dans lequel
la vanne de commutation (23), lorsque l'échangeur de chaleur côté utilisation (15, 16, 216) fournit une fonction de déshumidification, permet au fluide frigorigène de s'écouler du réservoir de fluide frigorigène (24) à travers la première vanne de régulation (31) jusqu'à l'échangeur de chaleur côté non utilisation (22), dans une première opération de déshumidification et de chauffage, et de s'écouler de l'échangeur de chaleur côté non utilisation (22) à travers la première vanne de régulation (31) jusqu'au réservoir de fluide frigorigène (24), dans une seconde opération de déshumidification et de chauffage.

7. Appareil à cycle de pompe à chaleur selon l'une quelconque des revendications 1 à 6, dans lequel
l'échangeur de chaleur côté non utilisation (22) est configuré pour devenir relativement petit en termes d'aire de section transversale de passage le long de l'écoulement du fluide frigorigène lorsque le fluide frigorigène s'écoule dans une direction, et pour devenir relativement grand en termes d'aire de section transversale de passage le long de l'écoulement du fluide frigorigène lorsque le fluide frigorigène s'écoule dans l'autre direction, et
la vanne de commutation (23) permet au fluide frigorigène de s'écouler dans l'une direction lorsque l'échangeur de chaleur côté non utilisation (22) est utilisé comme un condenseur, et de s'écouler dans l'autre direction lorsque l'échangeur de chaleur côté non utilisation (22) est utilisé comme un évaporateur.

8. Appareil à cycle de pompe à chaleur selon l'une quelconque des revendications 1 à 7, dans lequel
l'échangeur de chaleur côté utilisation (216) inclut un cycle à milieu (241) incluant l'échangeur de chaleur côté utilisation (216) qui est thermiquement couplé à un objet devant être refroidi ou chauffé, et un échangeur de chaleur fluide frigorigène-milieu (243) qui réalise un échange de chaleur entre le fluide frigorigène et le milieu dans le cycle à milieu.

9. Appareil à cycle de pompe à chaleur selon l'une quelconque des revendications 1 à 8, comprenant en outre :
un cycle de refroidissement (545) qui refroidit un dispositif générant de la chaleur (546) ; et
un échangeur de chaleur fluide frigorigène-milieux (548) qui réalise un échange de chaleur entre le fluide frigorigène et un milieu dans le cycle de refroidissement.

10. Appareil à cycle de pompe à chaleur selon l'une quelconque des revendications 1 à 9, comprenant en outre :
un compresseur (21) pour comprimer le fluide frigorigène, le compresseur (21) ayant un orifice (653) pour une injection de gaz ; et
un passage d'injection de gaz (651) reliant une sortie de composante gazeuse disposée sur le réservoir de fluide frigorigène (24) et l'orifice, dans lequel
la composante gazeuse accumulée dans le réservoir de fluide frigorigène (24) est injectée sous forme gazeuse par l'orifice (653) à travers le passage d'injection de gaz (651) à la fois dans l'opération de refroidissement et l'opération de chauffage.
